# EUROPÄISCHE PATENTSCHRIFT

(11) **EP 4 116 576 B1**
(45) Veröffentlichungstag und Bekanntmachung des Hinweises auf die Patenterteilung: **26.02.2025**
(21) Anmeldenummer: 21184542.5
(22) Anmeldetag: 08.07.2021
(51) Int. Cl.: F03D 7/02

(54) **VERFAHREN ZUM ERKENNEN EINER EXTREMLAST AN EINER WINDENERGIEANLAGE**
METHOD FOR DETECTING AN EXTREME LOAD ON A WIND POWER FACILITY
PROCÉDÉ DE DÉTECTION D'UNE CHARGE EXTRÊME SUR UNE ÉOLIENNE

(43) Veröffentlichungstag der Anmeldung: 11.01.2023
(73) Patentinhaber: Wobben Properties GmbH, 26607 Aurich (DE)
(72) Erfinder: VOLLACK, Stephan, 26605 Aurich (DE); VON ASWEGE, Enno, 26629 Großefehn (DE)
(74) Vertreter: Eisenführ Speiser

(56) Entgegenhaltungen:
- US-A1- 2014 178 197
- US-A1- 2021 115 896

## Beschreibung

Die vorliegende Erfindung betrifft ein Verfahren zum Erkennen einer durch eine Windböe hervorgerufenen asymmetrischen Extremlast, die auf eine Windenergieanlage wirkt. Die vorliegende Erfindung betrifft ebenfalls ein Verfahren zum Steuern einer Windenergieanlage zum Reduzieren von Extremlasten. Die Erfindung betrifft auch eine Windenergieanlage zum Ausführen wenigstens einer der beiden Verfahren.

Windenergieanlagen erzeugen elektrische Leistung aus Wind und sind üblicherweise als sogenannte Horizontalachsen-Windenergieanlagen ausgebildet, jeweils mit einem aerodynamischen Rotor mit mehreren, insbesondere drei Rotorblättern. Im Betrieb überstreichen diese Rotorblätter bei Drehung des aerodynamischen Rotors ein Rotorfeld. Solche Rotoren weisen bei modernen Windenergieanlagen Durchmesser von weit über 100m, teilweise über 150m auf. Dadurch kann viel Leistung aus dem Wind erzeugt werden, es treten aber auch große Lasten auf. Insbesondere bei auftretenden Böen können kurzfristig hohe Extremlasten auftreten, die zudem in dem großen Rotorfeld nur lokal auftreten können. Dadurch können asymmetrische Lasten entstehen, die eine zusätzliche Belastung für die Windenergieanlage bilden können.

Um solche Belastungen der Windenergieanlage zu reduzieren, kann die Windgeschwindigkeit und/oder die Belastung auf den Rotorblättern kontinuierlich überwacht werden. Wird hierbei eine zu hohe Last an dem aerodynamischen Rotor bzw. den Rotorblättern erkannt, können die Rotorblätter in ihrem Anstellwinkel etwas aus dem Wind gedreht werden, um dadurch die Belastung zu reduzieren bzw. einen weiteren Anstieg der Belastung zu vermeiden.

Dabei kann aber das Problem auftreten, dass die bereits aufgetretene hohe Last auf dem aerodynamischen Rotor zu einer entsprechenden Verbiegung des Turms der Windenergieanlage geführt hat. Der Turm ist somit - um es anschaulich zu formulieren - etwas nach hinten gedrückt oder nach hinten ausgelenkt. Durch das Einleiten der Lastreduzierung verringert sich auch der Druck auf den aerodynamischen Rotor, sodass die Windenergieanlage, zumindest im Bereich des Turmkopfes, zurückschwingt. Das wiederum ist eine Belastung für den Turm, die ebenfalls vermieden werden sollte.

Um solche Lasten frühzeitig zu erkennen, können auch Messgeräte zur Erfassung der Windgeschwindigkeit eingesetzt werden, die die Windgeschwindigkeit in einem gewissen Abstand vor dem aerodynamischen Rotor erfassen können. Dadurch kann eine herannahende Windböe erkannt werden. Eine solche Vorfelderkennung kann durch ein sog. LiDAR-Messsystem realisiert werden, solche LiDAR-Systeme können aber kostspielig sein und können bei ungünstigen Luftbedingungen, insbesondere bei stark verschmutzter Luft, einschließlich stark verregneter Luft fehleranfällig sein.

Die US 2021/115896 A1 betrifft ein Verfahren zum Reduzieren von Lasten auf einem Rotorblatt. Es ist vorgesehen, ein oder mehrere Lastsignale des Rotorblattes zu rekonstruieren. Die US 2014/178197 A1 betrifft eine Einzelblattverstellung, bei der die Rotorebene in mehrere Sektoren unterteilt wird. Die individuellen Sektoren werden für jedes Blatt während der Rotation mittels eines entsprechenden Azimutwinkelsensors bestimmt.

Der vorliegenden Erfindung liegt somit die Aufgabe zu Grunde, zumindest eines der oben genannten Probleme zu adressieren. Insbesondere soll eine Lösung zum Erkennen und/oder Vermeiden oder Reduzieren einer durch eine Windböe hervorgerufenen asymmetrischen Extremlast vorgeschlagen werden. Zumindest soll zu bisher bekannten Lösungen eine alternative Lösung vorgeschlagen werden.

Erfindungsgemäß wird ein Verfahren gemäß Anspruch 1 vorgeschlagen. Das Verfahren betrifft somit das Erkennen einer durch eine Windböe hervorgerufenen asymmetrischen Extremlast, die auf eine Windenergieanlage wirkt. Eine Extremlast ist eine Last, die einen vorbestimmbaren Lastgrenzwert überschreitet. Eine asymmetrische Extremlast ist dabei eine, die nicht gleichmäßig auf den Rotor der Windenergieanlage wirkt, sondern nur punktuell, also nur in einem Teilbereich des Rotorfeldes.

Die zu Grunde gelegte Windenergieanlage weist einen Rotor mit wenigstens drei Rotorblättern auf, wobei die Rotorblätter in ihrem Blattwinkel verstellbar sind und der Rotor mit seinen Rotorblättern ein Rotorfeld überstreicht.

Das Verfahren umfasst für jedes Rotorblatt ein fortlaufendes Erfassen einer Blattlast. Das Erfassen der Blattlast kann insbesondere kontinuierlich oder zumindest quasi kontinuierlich erfolgen. Das Erfassen kann dabei bspw. auch in vorbestimmten Zeitabständen durchgeführt werden, die aber so klein sein sollten, dass bei Nenndrehzahl des Rotors wenigstens dreimal pro Umdrehung eine Blattlast erfasst wird. Vorzugsweise soll aber wesentlich öfter die Blattlast erfasst werden, insbesondere wenigstens zehnmal oder wenigstens zwanzigmal pro Umdrehung des Rotors. Vorzugsweise erfolgt das Erfassen der Blattlast wenigstens alle 60° einer Rotorumdrehung, insbesondere wenigstens alle 30° einer Rotorumdrehung.

Die Blattlast kann besonders dadurch erfasst werden, dass eine Belastung, z.B. mittels eines Dehnungsmessstreifens, an einer Blattwurzel jedes Rotorblattes oder an dem Rotorblatt in der Nähe der Blattwurzel erfasst wird, insbesondere maximal in einem Abstand von 10m Entfernung von der Blattwurzel an dem Rotorblatt.

Es wird weiter vorgeschlagen, dass für wenigstens einen Sektor des Rotorfeldes wenigstens ein zeitlicher Sektorbelastungsverlauf aus erfassten Blattlasten unterschiedlicher Rotorblätter derselben Azimutposition ermittelt wird. Ein solcher Sektorbelastungsverlauf beschreibt einen zeitlichen Verlauf einer Belastung der Rotorblätter in dem Sektor und beinhaltet einen für einen zukünftigen Zeitraum extrapolierten Verlauf. Somit wird für den wenigstens einen Sektor eine Blattlast desjenigen Rotorblattes aufgenommen, das sich in dem Sektor befindet. Der Rotor dreht sich entsprechend weiter, sodass nach einiger Zeit ein anderes Rotorblatt in den Bereich des betrachteten Sektors gelangt und für dieses Rotorblatt wird dann die Blattlast erfasst und geht in den Sektorbelastungsverlauf dieses Sektors ein.

Diese beiden Blattlasten können bereits einen zeitlichen Verlauf darstellen. Dieser zeitliche Verlauf kann bspw. durch eine lineare Regression über die Zeit extrapoliert werden. Beträgt also bspw. die Blattlast eines ersten Rotorblatts in dem betrachteten Sektor zum ersten Zeitpunkt 40% einer Referenzblattlast, und die Blattlast des nächsten Rotorblatts zum nächsten Zeitpunkt 50% der Referenzblattlast, kann für einen dritten Zeitpunkt und damit auch ein drittes Rotorblatt 60% der Referenzblattlast als extrapolierter Wert angenommen werden. Der Verlauf vom zweiten zum dritten Zeitpunkt ist damit der extrapolierte Verlauf des Sektorbelastungsverlaufs.

Die Drehung des Rotors wird dabei als Drehung in Azimutrichtung bezeichnet und entsprechend werden die Positionen der Rotorblätter in Bezug auf diese Drehung in Azimutrichtung als Azimutpositionen bezeichnet.

Zum Ermitteln eines zeitlichen Sektorbelastungsverlaufs wird dabei vorgeschlagen, dass die Blattlasten zu sukzessiven Erfassungszeitpunkten erfasst oder berücksichtigt werden, die um eine Teilzeitdauer auseinanderliegen, in der sich der Rotor um ein Rotorblatt weiterdreht, sodass für den jeweiligen Sektor aufeinanderfolgende Blattlasten erfasst oder berücksichtigt werden. Für einen jeweiligen Sektor wird also eine Blattlast immer dann erfasst, wenn sich ein Rotorblatt in der entsprechenden Position befindet und die nächste Erfassung erfolgt, wenn sich das nächste Rotorblatt aufgrund der Drehung des Rotors in der entsprechenden Position des Sektors befindet. Dazu können die Blattlasten allerdings auch kontinuierlich oder quasi kontinuierlich erfasst werden, wobei die Blattlasten dann jeweils aufeinanderfolgenden Sektoren zugeordnet werden. Es können somit auch mehrere Messungen pro Sektor durchgeführt und z.B. gemittelt werden, um eine Blattlast für den jeweiligen Sektor zu erfassen. Dadurch können für jeden Sektor aufeinanderfolgende Blattlasten erfasst werden, nämlich mehrere Blattlasten pro Umdrehung.

Es wurde besonders erkannt, dass durch dieses Erfassen oder Berücksichtigen zu den Erfassungszeitpunkten Belastung der unterschiedlichen Rotorblätter aber demselben Sektor zugeordnet werden können. Es braucht also keine vollständige Umdrehung des Rotors abgewartet zu werden.

Dieses Vorgehen wird natürlich vorzugsweise nicht nur für einen Sektor, sondern für viele Sektoren durchgeführt. Das Rotorfeld kann bspw. in zwölf gleichmäßige Sektoren unterteilt werden, sodass jeder Sektor eine Größe von 30° aufweist, um ein Beispiel zu nennen. Für jeden dieser zwölf Sektoren wird dann ein Sektorbelastungsverlauf ermittelt und dazu können für jeden Sektor eigene entsprechende sukzessive Erfassungszeitpunkte vorgesehen sein.

Das Erfassen oder Berücksichtigen zu diesen sukzessiven Erfassungszeitpunkten kann natürlich auch so realisiert werden, dass absolute Azimutpositionen des Rotors berücksichtigt werden und immer zu denselben Positionen die Blattlasten erfasst oder berücksichtigt werden. Die Teilzeitdauer ist im Falle einer gleichförmigen Drehung des Rotors mit konstanter Drehzahl jeweils fest. Zu einer anderen Drehzahl nimmt sie einen anderen Wert an und bei einer Beschleunigung bzw. Abbremsung des Rotors bzw. der Rotordrehzahl kann sich die Teilzeitdauer auch entsprechend mit verändern.

Es wird nun weiter vorgeschlagen, dass auf das Erwarten einer Extremlast in Abhängigkeit von dem wenigstens einen Sektorbelastungsverlauf geprüft wird. Im einfachsten Fall ist eine Extremlast zu erwarten, wenn der extrapolierte Verlauf eines Sektorbelastungsverlaufs einen Belastungsgrenzwert erreicht oder überschreitet. Wenn dann die Windenergieanlage unverändert weiterbetrieben wird, ist zu erwarten, dass diese Extremlast dann tatsächlich auftritt und insbesondere auf ein Rotorblatt wirkt. Bei fortgesetzter Drehung kann die Extremlast dann auch auf ein weiteres Rotorblatt wirken.

Es wird aber vorgeschlagen, eine solche zu erwartende Extremlast mithilfe des Sektorbelastungsverlaufs zu erkennen und dann insbesondere Gegenmaßnahmen zu ergreifen, um die Belastung zu reduzieren. Dazu gehört besonders das Verstellen der Anstellwinkel der Rotorblätter oder zumindest des Anstellwinkels des Rotorblatts, das als nächstes den Sektor erreicht, für den eine Extremlast aufgrund der Prüfung erwartet wird.

Vorzugsweise werden in diesem Sinne Sektorbelastungsverläufe für jeden Sektor aufgenommen und in diesem Sinne ausgewertet. Für jeden Sektorbelastungsverlauf und damit für jeden Sektor wird somit ständig geprüft, ob eine Extremlast in dem betreffenden Sektor zu erwarten ist. Es wird also für jeden Sektorbelastungsverlauf geprüft, ob er eine Belastungsgrenze erreicht oder überschreitet.

Das Prüfen auf das Erwarten einer Extremlast muss aber nicht oder nicht nur durch den Vergleich des Sektorbelastungsverlaufs mit einem Belastungsgrenzwert erfolgen. Es können auch weitere Prüfungen hinzukommen, z.B. wie stark ein solcher Belastungsgrenzwert überschritten wird oder wie schnell sich die Belastung ändert, also wie steil der Sektorbelastungsverlauf ausgebildet ist.

Im Übrigen kann auch eine komplexere Extrapolation vorgesehen sein, bei der bspw. nicht nur eine Gerade, sondern eine Funktion höherer Ordnung zur Extrapolation verwendet wird. Besonders kann vorgesehen sein, hierzu mehr als nurzwei sukzessiv für einen Sektor erfasste Blattlasten zur Extrapolation heranzuziehen.

Gemäß einem Aspekt wird vorgeschlagen, dass der Sektorbelastungsverlauf als eine zeitliche Polynomfunktion erster oder höherer Ordnung ausgebildet ist. Dazu wurde bereits die Verwendung einer Geraden beschrieben, die somit eine zeitliche Polynomfunktion erster Ordnung ist, also eine Gerade, die auch eine Steigung haben kann. Bei einer höheren Ordnung kann z.B. eine von der Zeit abhängige quadratische Polynomfunktion angenommen werden.

Außerdem oder alternativ wird vorgeschlagen, dass eine zu erwartende Extremlast angenommen wird, wenn der Sektorbelastungsverlauf für einen zukünftigen Zeitpunkt einen vorbestimmten Belastungsgrenzwert erreicht oder überschreitet. Ein solcher zukünftiger Zeitpunkt ist insbesondere einer, der gegenüber dem aktuellen Zeitpunkt um die Teilzeitdauer beabstandet ist. Der aktuelle Zeitpunkt kann insbesondere der Zeitpunkt sein, zu dem zuletzt die Blattlast für den betrachteten Sektor erfasst wurde. Der zukünftige Zeitpunkt ist insoweit insbesondere derjenige, zu dem das nächste Rotorblatt den betrachteten Sektor erreichen wird.

Es kommt aber auch in Betracht, den zukünftigen Zeitpunkt anders zu wählen, insbesondere ihn noch weiter in der Zukunft zu wählen, z.B. um zwei Teilzeitdauern von dem aktuellen Zeitpunkt entfern. Je weiter der zukünftige Zeitpunkt gewählt wird, um so früher könnte natürlich eine zu erwartende Extremlast erkannt werden, um so unzuverlässiger kann allerdings auch eine solche Erwartung werden.

Gemäß einem Aspekt wird vorgeschlagen, dass aus wenigstens zwei aufeinanderfolgenden Blattlasten eines Sektors und wenigstens einer zugehörigen Zeitdauer der Sektorbelastungsverlauf ermittelt wird, und für einen nächsten sukzessiven Erfassungszeitpunkt, der noch in der Zukunft liegt, geprüft wird, ob der Sektorbelastungsverlauf den vorbestimmten Blattbelastungsgrenzwert erreicht oder überschreitet. Mithilfe zweier aufeinanderfolgender Blattlasten desselben Sektors und der zugehörigen Teilzeitdauer kann insbesondere auch eine zeitliche Steigung des Sektorbelastungsverlaufs bestimmt werden und unter Annahme einer konstanten Steigung lässt sich für den nächsten Erfassungszeitpunkt die zu erwartende Blattbelastung desselben Sektors ermitteln.

Insoweit wird eine Prädiktion der Blattbelastung für diesen nächsten Erfassungszeitpunkt durchgeführt. Mit dem so ermittelten Sektorbelastungsverlauf, also auch mit dem so prädizierten Wert der Blattbelastung für den nächsten Erfassungszeitpunkt, kann ein Vergleich mit dem vorbestimmten Blattbelastungsgrenzwert durchgeführt werden. Dadurch kann im Vorfeld erkannt werden, ob eine Extremlast zu erwarten ist. Von einer Extremlast wird dann ausgegangen, wenn der vorbestimmte Blattbelastungsgrenzwert erreicht oder überschritten wird.

Gemäß einem Aspekt wird vorgeschlagen, dass mittels des Sektorbelastungsverlaufs für einen zu prüfenden sukzessiven Erfassungszeitpunkt eine zu erwartende Blattlast ermittelt wird, zu dem zu prüfenden sukzessiven Erfassungszeitpunkt die aktuelle Blattlast erfasst wird und mit der zu erwartenden Blattlast verglichen wird, um eine Erwartungsabweichung zu ermitteln. In Abhängigkeit von der ermittelten Erwartungsabweichung wird dann der Sektorbelastungsverlauf angepasst.

Es wird also der erwartete Verlauf, der also vorausberechnet wurde, mit dem Verlauf verglichen, der dann tatsächlich aufgetreten ist. Die Abweichung an diesem zu prüfenden sukzessiven Erfassungszeitpunkt kann die ermittelte Erwartungsabweichung bilden. Davon abhängig kann der Sektorbelastungsverlauf angepasst werden. Besonders geht es hier um eine Prädiktion für den nächsten Erfassungszeitpunkt, der dem aktuell geprüften Erfassungszeitpunkt folgt. Durch die Erwartungsabweichung kann beispielsweise festgestellt werden, wenn die Blattbelastung des betrachteten Sektors schneller ansteigt als durch den Sektorbelastungsverlauf vorhergesagt wurde. Dadurch kann dann erkannt werden, wenn schneller als erwartet der Blattbelastungsgrenzwert erreicht werden kann.

Das Anpassen des Sektorbelastungsverlaufs kann insbesondere so erfolgen, dass der Sektorbelastungsverlauf von einem geraden Verlauf in einen gebogenen Verlauf geändert wird, oder anderweitig in seiner Ordnung erhöht wird. Es kann aber auch der Sektorbelastungsverlauf durch eine additive Komponente ergänzt werden. Das kann also bspw. an einen als Gerade mit Steigung ausgebildeten Sektorbelastungsverlauf eine Gerade mit höherer Steigung angehängt werden. Es kommt auch in Betracht, einfach die Parametrierung des Sektorbelastungsverlaufs anzupassen. Ist der Sektorbelastungsverlauf also als Gerade definiert mit einer Steigung, so kann diese Steigung entsprechend verändert werden. Ist der Sektorbelastungsverlauf eine Polynomfunktion zweiter oder höherer Ordnung, nämlich in Abhängigkeit von der Zeit, können entsprechend mehrere Parameter angepasst werden.

Gemäß einem Aspekt wird vorgeschlagen, dass die Blattlasten eines Rotorblattes, das eine Blattwurzel aufweist, jeweils am Rotorblatt im Bereich der Blattwurzel erfasst werden, insbesondere jeweils als Blattbiegung oder Blattbiegemoment. Hier wurde besonders erkannt, dass an der Blattwurzel bzw. im Bereich der Blattwurzel die gesamte auf das Rotorblatt wirkende Last wirkt. Eine solche Blattbelastung kann insbesondere durch einen oder mehrere Dehnungsmessstreifen in dem Bereich erfasst werden.

Idealerweise wird eine solche Blattlast unmittelbar an der Blattwurzel aufgenommen. Die Blattwurzel kann häufig aber aus Metall gefertigt sein, oder zumindest in einem metallischen Anschlussbereich zum Anschließen an der Rotornabe übergehen, während das Rotorblatt ansonsten aus einem anderen Material gefertigt ist, insbesondere aus glasfaserverstärktem Kunststoff. Um entsprechende Messungenauigkeiten zu vermeiden, die besonders durch den besagten Übergangsbereich zwischen zwei Materialien auftreten können, kann ein geringer Abstand vom Messaufnehmer am Rotorblatt zur Blattwurzel, insbesondere zum Anschlussflansch, vorgesehen sein. Der Bereich der Blattwurzel werden die inneren 10% des Rotorblattes verstanden. Das sind somit die ersten 10% von einem Blattanschlussadapter des Rotorblattes zu einer Rotorblattspitze des Rotorblattes. Hier können Biegungen auftreten, die gut erfasst werden können und im Wesentlichen die gesamte Belastung des Rotorblattes widerspiegeln.

Dazu können Biegesensoren, insbesondere Dehnungsmessstreifen, am Rotorblatt im Bereich der Blattwurzel angeordnet werden, die zudem in Umfangsrichtung um eine Rotorblattlängsachse verteilt sind. Zumindest sollten dann wenigstens zwei um 90° um die Rotorblattlängsachse in Umfangsrichtung verteilte Biegesensoren, also insbesondere Dehnungsmessstreifen, angeordnet sein. Hier liegt die Erkenntnis zu Grunde, dass die zu erfassende Blattlast auch eine Richtung aufweisen kann. Diese Richtung hängt insbesondere, aber nicht nur, von dem jeweils eingestellten Blattwinkel ab. Durch die so verteilten Biegesensoren kann die Richtung der jeweiligen Blattlast erfasst werden und damit auch insgesamt die Amplitude der Blattlast korrekt erfasst werden.

Gemäß einem Aspekt wird vorgeschlagen, dass mehrere Sektoren des Rotorfeldes auf Extremlasten beobachtet werden und zu jedem beobachteten Sektor die Blattlasten zu den sukzessiven Erfassungszeitpunkten erfasst werden, nämlich so, dass für jeden Sektor aufeinanderfolgende Blattlasten erfasst werden, und daraus wenigstens eine Veränderung der Blattlasten des jeweiligen Sektors ermittelt wird. Dazu wird weiter vorgeschlagen, dass aus der wenigstens einen Veränderung der Blattlasten eines ersten Sektors auf eine zu erwartende Veränderung der Blattlasten eines zweiten Sektors geschlossen wird. Das erfolgt insbesondere so, dass der Sektorbelastungsverlauf des zweiten Sektors in Abhängigkeit von dem Sektorbelastungsverlauf des ersten Sektors angepasst wird.

Es ist vorgesehen, asymmetrische Extremlasten zu erfassen, sodass erwartet wird, dass sich die Blattlasten der Sektoren zueinander unterscheiden. Gleichwohl wurde erkannt, dass eine Zunahme, insbesondere eine starke Zunahme, einer Blattlast in einem Sektor auch Rückschlüsse auf eine entsprechende Zunahme einer Blattlast in einem anderen Sektor zulässt, insbesondere in einem benachbarten Sektor. Somit wird vorgeschlagen, Erkenntnisse eines Sektors aus dessen Sektorbelastungsverlauf für einen anderen Sektor, nämlich insbesondere für seinen Sektorbelastungsverlauf mit zu berücksichtigen. Insbesondere kann der Sektorbelastungsverlauf des zweiten Sektors von dem Sektorbelastungsverlauf des ersten Sektors angepasst werden, wenn der erste Sektor in Drehrichtung des Rotors vor dem zweiten Sektor angeordnet ist.

Es kommen aber auch andere Konstellationen in Betracht. Insbesondere wurde erkannt, dass generell eine Zunahme einer Blattbelastung an einer Position des Rotorfeldes, insbesondere eine erhöhte Zunahme einer solchen Blattlast Rückschlüsse auf eine Zunahme der Blattlasten im gesamten Rotorfeld zulässt. Mit anderen Worten lassen sich zwar die absoluten Blattlasten eines Sektors nicht aus denen eines anderen Sektors unmittelbar bestimmen, ein Zunahmeszenario der Windgeschwindigkeit und damit der Blattlast aber auf das gesamte Rotorfeld oder zumindest einen über mehrere Sektoren reichenden Bereich des Rotorfeldes gelten kann.

Außerdem oder alternativ kann das Schließen aus der wenigstens einen Veränderung der Blattlasten des ersten Sektors auf die zu erwartende Veränderung der Blattlasten des zweiten Sektors so erfolgen, dass für den ersten Sektor ein erster Sektorbelastungsverlauf bestimmt wird und für den zweiten Sektor ein zweiter Sektorbelastungsverlauf bestimmt wird. Für den ersten Sektorbelastungsverlauf wird eine erste Erwartungsabweichung ermittelt und der zweite Sektorbelastungsverlauf wird in Abhängigkeit von der ersten Erwartungsabweichung angepasst. Es wird also auch hier eine Erwartungsabweichung ermittelt, die aber nicht oder nicht nur zur Verbesserung des Sektorbelastungsverlaufs desselben Sektors verwendet wird, sondern zur Verbesserung des Sektorbelastungsverlaufs eines anderen Sektors verwendet wird. Dadurch kann eine in einem Sektor zu erwartende Extremlast noch früher erkannt werden.

Erfindungsgemäß wird vorgeschlagen, dass ein Extremlastzeitpunkt bestimmt wird, an dem ein Auftreten einer Extremlast zu erwarten ist. Insbesondere wird vorgeschlagen, dass der Extremlastzeitpunkt aus dem wenigstens einen Sektorbelastungsverlauf bestimmt wird. Es wird also vorgeschlagen, zu überprüfen, wann eine Extremlast auftritt bzw. zu erwarten ist. Davon abhängig kann die Windenergieanlagensteuerung entsprechende Vorkehrungen treffen.

Eine mögliche Vorkehrung ist, die Rotorblätter oder zumindest ein Rotorblatt entsprechend frühzeitig im Blattwinkel zu verstellen, um dadurch die erwartete Extremlast abzumildern. Besonders wurde hier erkannt, dass durch das Ergreifen einer solchen frühzeitigen Maßnahme vermieden wird, dass die Blattbelastung und damit auch der Schub auf das Rotorblatt und damit den Rotor nicht erst reduziert wird, wenn die Windenergieanlage mit ihrem Turmkopf bereits stark nach hinten gedrückt ist. Wird die Belastung erst dann reduziert, kann ein Zurückschwingen nach vorne des Turmkopfes die Folge sein, was wiederum zu Turmbelastungen führen kann, die vermieden werden sollen. Durch ein frühzeitiges Reduzieren der Blattbelastung kann diese Turmbelastung vermieden, zumindest reduziert werden.

Gemäß einem Aspekt wird vorgeschlagen, dass die Blattwinkel der Rotorblätter voneinander unabhängig verstellbar sind.

Dadurch, dass die Blattwinkel der Rotorblätter voneinander unabhängig verstellbar sind, können die Blattlasten individuell beeinflusst werden. Durch das frühzeitige Erkennen konkreter Lasten durch das vorgeschlagene Verfahren, kann auch das unabhängige Verstellen, also das individuelle Verstellen der Blattwinkel gezielt eingesetzt werden. Es wurde auch erkannt, dass eine Einzelblattverstellung eine hohe Belastung darstellen kann, besonders für die Verstellantriebe. Durch das frühzeitige Erkennen der zu erwartenden Blattlast kann aber erreicht werden, dass die Verstellung rechtzeitig initiiert werden kann, wodurch eine geringere Verstellgeschwindigkeit möglich wird, was die Belastung verringert.

Außerdem oder alternativ wird vorgeschlagen, dass zum Ermitteln eines Sektorbelastungsverlaufs zu jeder erfassten Blattlast der Blattwinkel des betreffenden Rotorblattes berücksichtigt wird. Insbesondere wird vorgeschlagen, dass jede erfasste Blattlast in Abhängigkeit von dem zugehörigen Blattwinkel in eine äquivalente Blattlast umgerechnet wird, die einer Blattlast bei einem vorbestimmten Referenzblattwinkel entspricht.

Hier wurde besonders erkannt, dass der Blattwinkel einen großen Einfluss auf die Blattlast hat und das entsprechend auch bereits beim Ermitteln des Sektorbelastungsverlaufs berücksichtigt werden kann. Dabei wurde auch erkannt, dass für die Windenergieanlage eine Einzelblattverstellung vorliegen kann, bei der die Rotorblätter voneinander unabhängig unterschiedliche Blattwinkel einnehmen können. Das kann dazu führen, dass sich in demselben Sektor für unterschiedliche Rotorblätter bei gleichem Wind unterschiedliche Blattlasten ergeben. Es wird vorgeschlagen, dies zu berücksichtigen und insbesondere herauszurechnen.

Es können sich in demselben Sektor auch bei synchroner Verstellung der Blattwinkel aller Rotorblätter unterschiedliche Blattwinkel in demselben Sektor für unterschiedliche Blätter ergeben, weil die Rotorblätter zu unterschiedlichen Zeiten in demselben Sektor sind.

Jeder Sektorbelastungsverlauf soll eine Belastung des betreffenden Sektors wiedergeben, unabhängig von dem konkreten Rotorblatt, was eine solche Belastung gerade erfährt. Um dennoch einen einheitlichen Verlauf zu erhalten, wird vorgeschlagen, jede erfasste Blattlast in eine äquivalente Blattlast umzurechnen. Die äquivalente Blattlast gibt dann also die Blattlast an, die sich einstellen würde, wenn das Rotorblatt den vorbestimmten Referenzblattwinkel aufweist. Der Referenzblattwinkel schafft somit eine einheitliche Bezugsgröße, sodass Blattlasten, die bei unterschiedlichen Blattwinkeln aufgenommen wurden, besser vergleichbar werden.

Es kommt hinzu, dass der Sektorbelastungsverlauf auch einen für einen zukünftigen Zeitraum extrapolierten Verlauf beinhaltet. Wird die Blattlast jeweils auf einen Referenzblattwinkel bezogen, kann diese Extrapolation ohne weiteres vorgenommen werden, ohne jeweils den Blattwinkel des zugehörigen Rotorblattes zum extrapolierten Zeitraum kennen zu müssen. Es kommt hinzu, dass der Sektorbelastungsverlauf als kontinuierlicher Verlauf ausgebildet sein kann, obwohl eine Blattbelastung in dem zugehörigen Sektor tatsächlich immer nur dann vorliegen kann, wenn sich ein Rotorblatt auch in dem Sektor befindet. Somit wären Zeitbereiche zwischen zwei Zeitpunkten hinsichtlich des Rotorblattwinkels undefiniert, da hier kein Rotorblatt im Sektor vorhanden ist. Durch die Bezugnahme auf den Referenzblattwinkel wird somit die Abhängigkeit vom Blattwinkel quasi herausgerechnet und damit das genannte Problem der Unbestimmtheit aufgehoben.

Besonders bevorzugt wird als vorbestimmter Referenzblattwinkel ein Teillastblattwinkel verwendet, der für den Teillastbereich bzw. Teillastbetrieb als aerodynamisch optimaler Blattwinkel festgestellt wurde und verwendet wird.

Hierfür wird insbesondere eine Windenergieanlage zu Grunde gelegt, die so gesteuert wird, dass im Teillastbereich für alle Rotorblätter ein fest eingestellter Blattwinkel verwendet wird.

Der Teillastbereich bzw. Teillastbetrieb ist derjenige, in dem die vorherrschende Windgeschwindigkeit noch keine Nennwindgeschwindigkeit erreicht hat und/oder die Windenergieanlage, ohne dass sie künstlich gedrosselt wurde, noch unter Nenndrehzahl, unter Nennleistung und/oder unter Nennmoment betrieben wird.

Bei einem solchen Rotorblattwinkel ist gegenüber anderen Blattwinkeln mit einer maximalen Blattlast zu rechnen. Wird der Sektorbelastungsverlauf auf diesen Blattwinkel bezogen, gibt der Sektorbelastungsverlauf damit auch den Verlauf der maximalen Belastung wieder. Entsprechend kann die maximale Belastung ausgewertet werden und davon abhängig, wenn diese nämlich den vorbestimmten Blattbelastungsgrenzwert überschreitet, ein Blattwinkel mit geringerer Blattlast eingestellt werden, bzw. vorgegeben werden. Die Windenergieanlage bzw. einzelne Rotorblätter können schließlich bereits mit einem anderen Blattwinkel als dem vorbestimmten Referenzblattwinkel betrieben werden.

Vorzugsweise kann aus einer Auswertung eines Sektorbelastungsverlaufs ein minimaler Blattwinkel bestimmt werden, der nicht unterschritten werden soll. Ist der Blattwinkel kleiner, wird er dann zu diesem vorgegebenen minimalen Blattwinkel verstellt. Ist der aktuelle Blattwinkel aber größer, oder genauso groß, so braucht keine Verstellung vorgenommen zu werden. Dabei liegt eine übliche Definition der Blattwinkel zu Grunde, bei der diese ihren maximalen Wert zu einer Fahnenstellung hin erreichen, ihren maximalen Wert also erreichen, wenn sie vollständig aus dem Wind herausgedreht sind. Der genannte Teillastblattwinkel ist entsprechend ein kleiner Winkel Der Teillastblattwinkel kann im Bereich von -5° bis 10°, insbesondere im Bereich von 0° bis 5° liegen, während der Blattwinkel in Fahnenstellung im Bereich von 80° bis 110° liegt, insbesondere im Bereich von etwa 90° bis 100°.

Gemäß einem Aspekt wird vorgeschlagen, dass jede erfasste Blattlast in Abhängigkeit von dem zugehörigen Blattwinkel in einen lokalen Windwert umgerechnet wird, wobei insbesondere vorgesehen ist, dass aus den Windwerten einiger oder aller Sektoren ein Windfeld erstellt wird. Außerdem oder alternativ wird vorgeschlagen, dass jeder Sektorbelastungsverlauf in einen Windverlauf in dem Sektor umgerechnet wird, sodass jeder Windverlauf einen für einen zukünftigen Zeitraum extrapolierten Verlauf beinhaltet. Insbesondere ist vorgesehen, dass aus den Windverläufen einiger oder aller Sektoren ein Windfeldverlauf erstellt wird.

Der erfassten Blattlast liegt eine bestimmte Windsituation zu Grunde, und die kann somit auch aus der erfassten Blattlast abgeleitet werden. Dazu können beispielsweise Zusammenhänge zwischen erfasster Blattlast und Windsituation in einer Messanlage mit zusätzlichen aufwändigen Windsensoren, insbesondere LiDAR, erfasst werden. Basierend auf diesen Zusammenhängen, die vorabaufgenommen werden können, kann dann im laufenden Betrieb aus den Belastungen auf Windwerte und das Windfeld geschlossen werden. Das Windfeld beschreibt somit die Verteilung der Windwerte über die Sektoren des Rotorfeldes. Zusammenhänge zwischen erfasster Blattlast und Windsituation können auch durch Simulationen bestimmt werden, z.B. unter Verwendung der Blatt-Element-Methode (BEM).

Eine solche Windsituation kann für den betreffenden Sektor neben einer durchschnittlichen Windstärke auch eine Windrichtung beinhalten. Ein Windwert kann somit als Wertepaar aus Windgeschwindigkeit und Windrichtung gebildet sein. Unterscheiden sich die Windrichtungen von einem Sektor zum nächsten, kann daraus auch eine Windscherung abgeleitet werden. Diese kann ebenfalls Teil des Windwertes sein. Windrichtungen und Scherungen können aus Variationen der Blattlast von einem zum nächsten Sektor abgeleitet werden. Eine Windrichtung könnte bspw. aus zwei unterschiedlichen Lastwerten abgeleitet werden, von denen einer ein Biegemoment und der andere ein Torsionsmoment desselben Blattes wiedergibt.

Aus den Sektorbelastungsverläufen kann zudem ein Windverlauf des jeweiligen Sektors abgeleitet werden, also eine zeitliche Veränderung des Windwertes des betreffenden Sektors. Auch hier können Veränderungen der Windrichtung Teil eines solchen Windverlaufs sein. Auch daraus lassen sich Windscherungen ableiten, insbesondere unter weiterer Berücksichtigung der Windverläufe weiterer, insbesondere benachbarter Sektoren.

Es wurde somit erkannt, dass aus den Sektorbelastungsverläufen Windverläufe abgeleitet werden können und diese insgesamt als Windfeld und dabei als Windfeldverlauf berücksichtigt werden können. Die zu Grund liegenden Sektorbelastungsverläufe beinhalten auch extrapolierte Verläufe und genau so können auch die Windverläufe und damit der Windfeldverlauf einen extrapolierten Bereich beinhalten. Es ist somit eine Prädiktion des Windfeldes im Rotorfeld möglich.

Es ist aber auch möglich, lediglich aus den Windwerten einiger oder aller Sektoren ein Windfeld zu erstellen. Es muss also nicht unbedingt ein Windfeldverlauf mit Vorhersage erstellt werden, sondern das Erstellen eines Ist-Zustandes kann auch bereits sinnvoll sein.

Gemäß einem Aspekt wird vorgeschlagen, dass bei Erkennen einer zu erwartenden Extremlast in wenigstens einem Sektor ein Anlagenbetrieb verändert wird, um eine Belastung der Windenergieanlage zu verringern oder zu begrenzen. Insbesondere wird vorgeschlagen, dass der Anlagenbetrieb dadurch verändert wird, dass der Blattwinkel wenigstens eines der Rotorblätter verstellt wird, um eine Blattlast in dem wenigstens einen Rotorblatt zu verringern oder zu begrenzen. Somit wird vorgeschlagen, das Erkennen einer zu erwartenden Extremlast so zu verwenden, dass rechtzeitig Maßnahmen zur Belastungsreduzierung durch Veränderung des Betriebs der Windenergieanlage ergriffen werden. Besonders wird vorgeschlagen, die Rotorblätter oder zumindest eines, rechtzeitig aus dem Wind zu drehen. Effekte dazu wurden bereits oben beschrieben.

Insbesondere wird vorgeschlagen, dass dann, wenn ein Extremlastzeitpunkt erkannt wurde, an dem die Extremlast zu erwarten ist, der Anlagenbetrieb verändert wird, bevor der Extremlastzeitpunkt erreicht wird. Dadurch kann nicht nur verhindert werden, dass die Extremlast auftritt, sondern es kann auch verhindert werden, dass eine Überreaktion beim Verändern des Betriebs der Windenergieanlage erfolgt, wenn nämlich erst bei Eintreten der Extremlast reagiert wird.

Außerdem oder alternativ wird vorgeschlagen, dass ein Sektor identifiziert wird, in dem die Extremlast erwartet wird, und der Blattwinkel eines Rotorblattes verändert wird, bevor es den Sektor erreicht, für den die Extremlast erwartet wird. Hier wird somit insbesondere eine Einzelblattverstellung vorgeschlagen, die gezielt nur das jeweilige Rotorblatt zur Belastungsreduzierung verstellt, um in genau dem lokalisierten Sektor die erwartete Extremlast zu vermeiden. Die Windenergieanlage kann ansonsten normal weiterbetrieben werden und besonders braucht in anderen Bereichen des Rotorfeldes eine Blattverstellung nicht oder nicht in dem Maße vorgenommen zu werden, sodass dort weiterhin möglichst viel Energie erzeugt werden kann.

Außerdem oder alternativ wird vorgeschlagen, dass die Blattwinkel aller Rotorblätter verstellt werden. Insbesondere wird vorgeschlagen, dass dies vor dem Zeitpunkt erfolgt, an dem die Extremlast erwartet wird und dass wieder reduziert wird, wenn sich die Lasten wieder reduziert haben. Grundsätzlich denkbar ist aber auch, dass alle Rotorblätter zugleich verstellt werden, wenn sich eines dem Sektor nähert, in dem die Extremlast gerade erwartet wird.

Gemäß einem Aspekt wird vorgeschlagen, dass aus dem wenigstens einen ermittelten Sektorbelastungsverlauf ein Verstellwinkel zum Verstellen wenigstens eines Rotorblattes bestimmt wird, und/oder ein Zielzeitpunkt bestimmt wird, bis zu dem der Verstellwinkel verstellt sein soll, und insbesondere aus dem Zielzeitpunkt und dem Verstellwinkel eine Verstellgeschwindigkeit bestimmt und vorgegeben wird, und/oder ein minimal einzustellender Blattwinkel bestimmt wird, unter den ein Rotorblatt in seinem Blattwinkel nicht verstellt wird.

Somit wird besonders vorgesehen, dass aus dem Sektorbelastungsverlauf nicht lediglich abgeleitet wird, ob eine Blattverstellung erfolgt, sondern dass sie auch der Größe nach festgelegt wird. Dabei kann aus dem Sektorbelastungsverlauf unmittelbar ein Blattwinkel abgeleitet und eingestellt werden, wobei auch ein Blattwinkelverlauf in Betracht kommt. Ein solcher Blattwinkelverlauf kann sich an dem Verlauf des Sektorbelastungsverlaufs orientieren, oder so gewählt werden, dass frühzeitig das Verstellen des Blattwinkels beginnt, sodass dieser rechtzeitig einen gewünschten Endwert erreicht.

Aus dem Sektorbelastungsverlauf kann nicht nur frühzeitig erkannt werden, wann eine Verstellung ratsam ist, sondern auch wie sie am besten durchgeführt werden sollte. Der Belastungsverlauf zeigt an, wann eine maximale Belastung erreicht werden kann und auch wie groß sie wäre. Daraus kann der Zielzeitpunkt abgeleitet werden, zu dem die Blattverstellung abgeschlossen sein sollte, und welcher Blattwinkel erreicht werden sollte, der die zu erwartende Belastung ausreichend reduziert. Daraus ergibt sich der Verstellwinkel. Mit einzuhaltender Verstellzeit, also Dauer bis zum Zielzeitpunkt, kann die Verstellgeschwindigkeit bestimmt und vorgegeben werden. Jedes Rotorblatt kann also mit angepasster Verstellgeschwindigkeit in die neue Position verstellt werden.

Die größte Belastung ist bei einem geringen Blattwinkel zu erwarten, besonders bei einem Teillastblattwinkel, der oben bereits erläutert wurde. Zur Entlastung bzw. zum Vermeiden großer Lasten wird ein Rotorblatt somit aus dem Wind gedreht, was bedeutet, dass sich sein Blattwinkel vergrößert. Ein minimal einzustellender Blattwinkel ist somit eine Untergrenze für den einzustellenden Blattwinkel und damit eine Belastungsobergrenze. Es kann vorkommen, dass der Blattwinkel bereits größer als ein solcher minimal einzustellender Blattwinkel ist und dann soll aus einer zu erwartenden Extremlast, die sich aus wenigstens einem Sektorbelastungsverlauf ableitet, keine Verringerung des Blattwinkels erfolgen, denn dann würde die aktuelle Last noch erhöht werden.

Gemäß einem Aspekt wird ein Verfahren zum Steuern einer Windenergieanlage vorgeschlagen, wobei die Windenergieanlage in Abhängigkeit von einem Erkennen einer durch eine Windböe hervorgerufenen asymmetrischen Extremlast gesteuert wird, die auf eine Windenergieanlage wirkt, und wobei das Verfahren zum Steuern wenigstens ein Verfahren zum Erkennen einer durch eine Windböe hervorgerufenen asymmetrischen Extremlast nach einem der vorstehenden Aspekte ausführt. Das Steuerverfahren baut also auf dem Erkennungsverfahren auf. Die Windenergieanlage wird in Abhängigkeit von der Erkennung der Extremlasten gesteuert.

Soweit das Verfahren zum Erkennen einer durch eine Windböe hervorgerufenen asymmetrischen Extremlast auch Schritte oder Merkmale zum Steuern oder andere Schritte oder Merkmale umfasst, sollen diese Schritte oder Merkmale ebenfalls von dem Verfahren zum Steuern mit übernommen werden.

Die Erfindung betrifft außerdem eine Windenergieanlage, dazu vorbereitet,
- ein Verfahren auszuführen zum Erkennen einer durch eine Windböe hervorgerufenen asymmetrischen Extremlast, die auf die Windenergieanlage wirkt, und/oder
- ein Verfahren auszuführen zum Steuern der Windenergieanlage, wobei die Windenergieanlage in Abhängigkeit von einem Erkennen einer durch eine Windböe hervorgerufenen asymmetrischen Extremlast gesteuert wird, die auf eine Windenergieanlage wirkt,
   wobei die Windenergieanlage
      - einen Rotor mit wenigstens drei Rotorblättern aufweist,
      - die Rotorblätter in ihrem Blattwinkel verstellbar sind, und
      - der Rotor mit seinen Rotorblättern ein Rotorfeld überstreicht,
   und das Verfahren umfasst
      - für jedes Rotorblatt fortlaufendes Erfassen einer Blattlast,
      - für wenigstens einen Sektor des Rotorfeldes Ermitteln wenigstens eines zeitlichen Sektorbelastungsverlaufs aus erfassten Blattlasten unterschiedlicher Rotorblätter derselben Azimutposition, der einen zeitlichen Verlauf einer Belastung der Rotorblätter in dem Sektor beschreibt und einen für einen zukünftigen Zeitraum extrapolierten Verlauf beinhaltet, wobei
         - die Blattlasten zu sukzessiven Erfassungszeitpunkten erfasst oder berücksichtigt werden, die um eine Teilzeitdauer auseinanderliegen, in der sich der Rotor um ein Rotorblatt weiterdreht, sodass für den jeweiligen Sektor aufeinanderfolgende Blattlasten erfasst oder berücksichtigt werden, und
      - Prüfen auf das Erwarten einer Extremlast in Abhängigkeit von dem wenigstens einen Sektorbelastungsverlauf, wobei
ein Extremlastzeitpunkt bestimmt wird, an dem ein Auftreten einer Extremlast zu erwarten ist, insbesondere, dass der Extremlastzeitpunkt aus dem wenigstens einen Sektorbelastungsverlauf (208) bestimmt wird.

Insbesondere ist ein solches Verfahren zum Steuern der Windenergieanlage in der Windenergieanlage implementiert, insbesondere in einem Prozessrechner oder Steuerungsrechner oder anderen Steuerungseinrichtung. Zum Erfassen einer Blattlast für jedes Rotorblatt ist eine Erfassungsvorrichtung vorgesehen. Diese kann bspw. Dehnungsmessstreifen an den Rotorblättern umfassen und wenigstens eine Auswerteeinrichtung zum Auswerten entsprechender von den Dehnungsmessstreifen erhaltener Signale.

Insbesondere ist die Windenergieanlage dazu vorbereitet, ein Verfahren gemäß einer der vorstehend beschriebenen Aspekte auszuführen. Insbesondere weist die Windenergieanlage eine Steuereinrichtung zum Ausführen eines Steuerverfahrens auf und das Steuerverfahren ist dabei in der Steuereinrichtung implementiert. Die Steuereinrichtung kann dazu einen Prozessrechner aufweisen, in dem das Verfahren implementiert ist. Die Steuereinrichtung kann aber auch mehrere Einheiten umfassen, auf die das Verfahren aufgeteilt ist.

Vorzugsweise umfasst die Steuereinrichtung eine Steuereinheit zum Steuern der Windenergieanlage und eine Erfassungseinheit zum Erfassen einer Extremlast.

Nachfolgend wird die Erfindung beispielhaft anhand von Ausführungsformen unter Bezugnahme auf die begleitenden Figuren exemplarisch näher erläutert.
- Figur 1: zeigt eine Windenergieanlage in einer perspektivischen Darstellung.
- Figur 2: zeigt ein Zeitdiagramm zum Veranschaulichen eines Aspektes.
- Figur 3: zeigt eine Frontansicht auf ein Rotorfeld.
- Figur 4: zeigt eine schematische Seitenansicht auf eine Windenergieanlage und damit auch auf ein in Figur 3 gezeigtes Rotorfeld.
- Figuren 5 und 6: zeigen jeweils eine Frontansicht auf ein Rotorfeld bei unterschiedlichen Rotorpositionen.
- Figur 7: zeigt ein Zeitdiagramm zum Veranschaulichen einer Prognoseverbesserung.

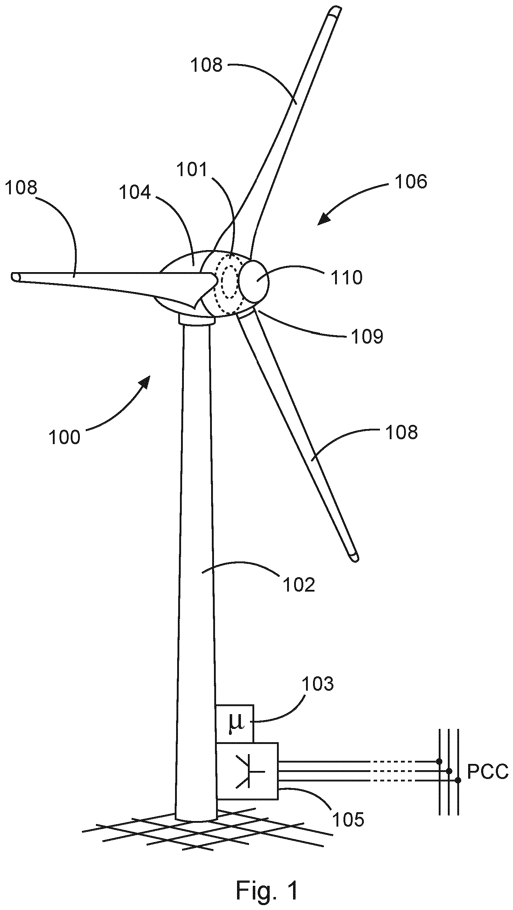

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

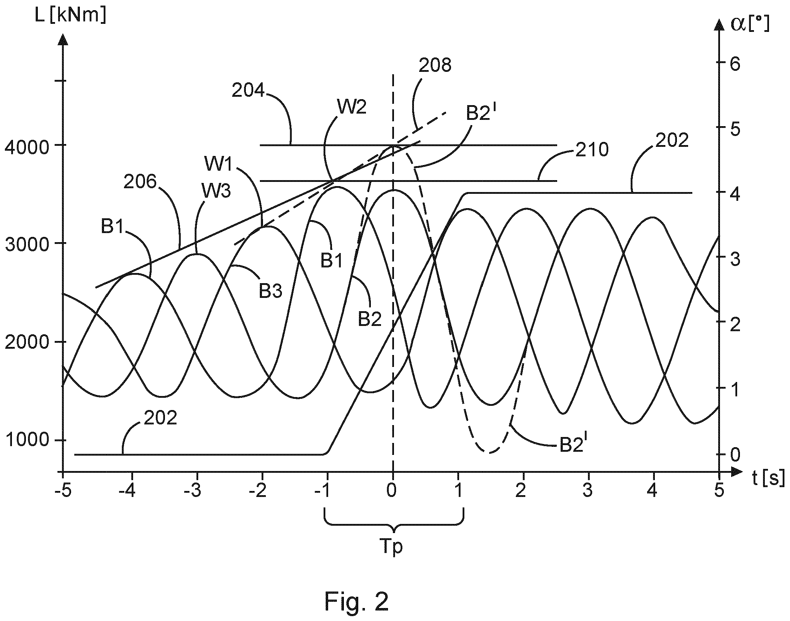

Figur 2 zeigt ein Zeitdiagramm, in dem für drei Rotorblätter ein exemplarischer Lastverlauf einer äquivalenten Blattlast dargestellt ist, die somit auf einen Referenzwinkel umgerechnet, also normiert ist. Diese Lastverläufe, die synonym auch als Blattlastverläufe bezeichnet werden können, werden in der Figur 2 als B1, B2 und B3 bezeichnet, also als Lastverläufe für ein erstes, zweites und drittes Rotorblatt.

Außerdem ist ein Blattwinkelverlauf 202 eingezeichnet. Die Blattwinkel können voneinander unabhängig verstellt werden, was hier auch zu Grunde lag, die Abweichungen zwischen den Blättern sind aber für die generelle Erläuterung gemäß Figur 2 nicht von Bedeutung, sodass der Einfachheit halber nur dieser einzige Blattwinkelverlauf 202 in dieser Figur 2 gezeigt ist.

Das Zeitdiagramm zeigt somit an der Abszisse die Zeit in Sekunden, an der linken Ordinate die Last in Kilonewtonmeter und an der rechten Ordinate den Blattwinkel in Grad. Der zeitliche Nullpunkt ist dort gewählt, wo ein Lastverlauf einen Grenzwert, nämlich zulässigen Maximalwert erreicht hätte, würde der Blattwinkel nicht verändert werden. Dazu ist ein nicht optimaler Blattlastverlauf B2' eingezeichnet, der bei t=0 einen Extremlastwert 204 erreicht und einen Verlauf ohne Blattwinkelverstellung wiedergibt.

Beginnend etwa 5 s vor diesem Nullpunkt sind die drei Belastungsverläufe B1-B3 mit Schwankungen behaftet, in der Amplitude aber ansteigend. Zuvor waren sie mit ähnlichen Schwankungen behaftet, aber nicht ansteigend, was hier nicht dargestellt ist. Die Schwankungen der Belastung dieser drei Belastungsverläufe B1-B3 sind u.a. auch darauf zurückzuführen, dass die Rotorblätter durch die Drehung des Rotors unterschiedliche Bereiche im Rotorfeld überstreichen und dadurch unterschiedlichen Windbelastungen ausgesetzt sind. Besonders im unteren Bereich können die Belastungen geringer und im oberen Bereich stärker sein. Es kommen aber auch Windschwankungen oder andere Variationen im Windfeld hinzu. Die Verläufe sind zudem vereinfacht dargestellt, da es hier auf weitere kleinere Schwankungen nicht ankommt.

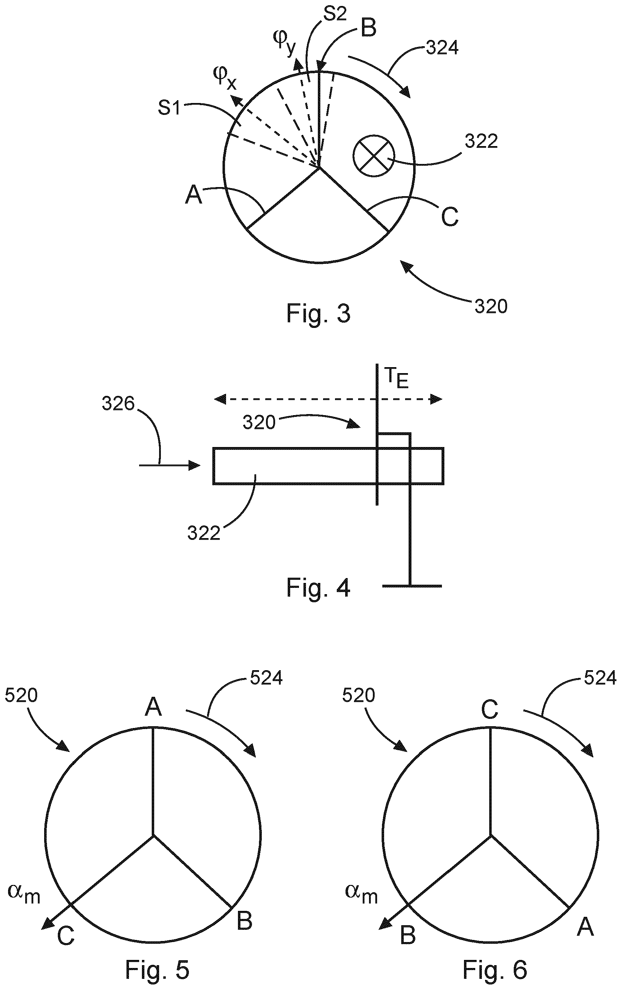

Dem Zeitdiagramm der Figur 2 liegt ein Betrieb der Windenergieanlage zu Grunde, bei dem sich der Rotor ungefähr mit 20 U/min dreht. Damit dreht sich etwa in 1 s der Rotor um ein Rotorblatt weiter. Dadurch ergibt sich etwa alle 1 s eine Art Belastungsspitze für jeweils wechselnde Blätter. Die Rotorblätter überstreichen hierbei einen Windbereich, von dem eine große Belastung ausgeht. Das wird besonders auch noch nachfolgend in den Figuren 3 und 4 erläutert.

In dem Zeitdiagramm gemäß Figur 2 ist zudem der Extremlastwert 204 als waagerechte Gerade eingezeichnet. Diese dargestellte Belastung soll möglichst nicht erreicht, zumindest nicht überschritten werden.

Ausgehend von der anfänglich schwachen Belastung ist zu erkennen, dass diese Belastung ansteigt. Um nun zu verhindern, dass der Extremlastwert 204 erreicht wird, kann eine entsprechende Überprüfung durchgeführt werden. Die dargestellten Lasten können beispielsweise durch Dehnungsmessstreifen an der Blattwurzel bzw. in der Nähe der Blattwurzel erfasst werden, und mit einem Grenzwert, wie dem Extremlastwert 204 verglichen werden.

Das hat aber den Nachteil, dass eine solche Erfassung und ein solcher Vergleich sehr spät erfolgt. Alternativ könnte mit einem verringerten Grenzwert verglichen werden, um eine Gegenmaßnahme, nämlich eine Blattverstellung, früher auszulösen. Das könnte aber zu einer unerwünschten Auslösung führen, wenn der Extremlastwert 204 gar nicht erreicht wird, sondern nur einmalig ein solcher verringerter Grenzwerterreicht wird.

Stattdessen wird vorgeschlagen, den in der Figur 2 zu erkennenden Anstieg auszuwerten, um das zu erwartende Erreichen des Extremlastwertes 204 zu antizipieren.

Ein solcher Belastungsanstieg kann beispielsweise ausgehend von der Betrachtung nur eines Blattbelastungsverlaufs, z.B. des ersten Blattbelastungsverlaufs B1, erkannt werden. Dazu ist exemplarisch eine Einzelanstiegsgerade 206 als durchgezogene Gerade eingezeichnet, die im Grunde als Verbindung der beiden Maximalwerte des ersten Blattbelastungsverlaufs B1 ausgebildet ist. Eine solche Einzelbelastungsgerade 206 hat aber den Nachteil, dass sie ungenau sein kann und/oder wenigstens eine Rotorumdrehung benötigt, um überhaupt aufgenommen werden zu können.

Stattdessen wird ein Sektorbelastungsverlauf 208 vorgeschlagen, der dort als lang gestrichelte Gerade eingezeichnet ist. Der Sektorbelastungsverlauf 208 ist hier als Gerade ausgebildet und wird aus zwei Werten der beiden Blattbelastungsverläufe B1 und B3 bestimmt. Die beiden dafür verwendeten Belastungswerte sind als erster und zweiter Belastungswert W1 und W2 eingezeichnet. Aus diesen beiden Werten, die im gezeigten Bsp. nur 1 Sekunde auseinanderliegen, kann dieser Sektorbelastungsverlauf 208 bestimmt werden und es ist erkennbar, dass die Belastung in dem Sektor sehr bald den Maximalwert erreichen würde.

In dem Moment, in dem der zweite Belastungswert W2 erreicht wird, kann dieser Sektorbelastungsverlauf 208 berechnet werden und das baldige Erreichen des Extremlastwertes 204 erkannt werden. Somit wird zu diesem Zeitpunkt, hier also eine Sekunde vor dem Erreichen des Extremlastwertes 204, ein Pitchen eingeleitet. Der Blattwinkel aller Blätter wird vergrößert, die Rotorblätter werden also aus dem Wind gedreht. Das zeigt der Blattwinkelverlauf 202.

Durch das frühzeitige Verstellen des Blattwinkels bzw. der Blattwinkel, ist eine moderate Verstellgeschwindigkeit möglich, die hier beispielhaft 2° pro Sekunde (2°/s) beträgt. Sie könnte aber auch geringer sein und bspw. 1°/s betragen. Im gezeigten Beispiel hat sich der Blattwinkel somit in der ersten Sekunde ab Beginn des Verstellens um 2° verändert. Das führt bereits dazu, dass der Lastverlauf B2 des zweiten Blattes den Extremlastwert 204 nicht mehr erreicht. Nach zwei Sekunden ist der Blattwinkel dann um 4° verstellt, was zu einer deutlichen Entlastung führt. Der Blattwinkel kann dann auch wieder verringert werden, zumindest etwas. Nurzum Zwecke der Veranschaulichung nimmt er in der Darstellung der Figur 2 ab 1s den konstanten Wert von 4° an.

Insbesondere wird Folgendes vorgeschlagen. Zu dem Zeitpunkt der Auslösung einer Blattverstellung ist die momentane Last an den Blättern, ein Pitchwinkel und die zu erwartende Last bekannt, kann zumindest geschätzt werden. Darauf basierend kann ein Winkel prognostiziert werden, sodass ein resultierender Endwinkel bekannt ist. Dadurch kann die Pitchgeschwindigkeit entsprechend vorgegeben werden und langsam oder schnell herausgefahren werden, je nach Situation. Die Pitchgeschwindigkeit, also die Geschwindigkeit, mit der die Rotorblätter verstellt werden, kann somit gezielt vorgegeben und gesteuert werden.

Dieser Sektorbelastungsverlauf 208 kann alternativ auch die Belastungswerte aller drei Blattbelastungsverläufe B1-B3 betrachten, indem z.B. als dritter Belastungswert W3 der des Blattbelastungsverlaufs B2 zusätzlich betrachtet wird. Der Sektorbelastungsverlauf 208 würde dann etwas anders verlaufen. Er könnte ebenfalls als Gerade, aber auch als Kurve zweiter Ordnung ausgebildet sein, also durch ein von der Zeit abhängiges Polynom zweiter Ordnung beschrieben werden.

Die Belastungswerte W1 bis W3 können bspw. jeweils Mittelwerte mehrerer Messwerte des jeweiligen Blattes in dem betreffenden Sektor sein. Der Sektorbelastungsverlauf 208 muss keine Tangente der beiden Blattbelastungsverläufe B1 und B3 sein bzw. aller dreier Belastungsverläufe. Die Belastungswerte W1 bis W3 befinden sich aber im Bereich der Maximalwerte der Blattbelastungsverläufe, denn hier liegt der Sektor mit der maximalen Belastung. Sektoren mit geringerer Belastung werden auch untersucht, führen hier aber nicht zu einem Auslösen der Blattverstellung. Daher wird ihre Auswertung hier nicht dargestellt.

Bspw. kann das Rotorfeld in 36 Sektoren zu jeweils 10° aufgeteilt sein, um ein Beispiel zu nennen, und in jedem dieser 36 Sektoren wird ein solcher Sektorbelastungsverlauf 208 aufgenommen. Es ergeben sich dann auch Sektorbelastungsverläufe, die bspw. auch im Bereich der unteren Werte liegen können, dann aber nicht zu einer Erkennung einer hohen Belastung führen.

In dem Beispiel von 36 Sektoren ergeben sich also 36 Sektorbelastungsverläufe und von denen wird zur Lastminimierung der kritischste betrachtet, also der, der eine Tendenz aufweist, den Extremlastwert 204 zu erreichen. Der Sektorbelastungsverlauf 208 ist ein solcher und damit befindet er sich auch in etwa bei den Belastungsspitzen der drei Blattbelastungsverläufe B1-B3.

Durch die Verwendung aller Rotorblätter, also der Belastungswerte aller Rotorblätter jeweils eines Sektors, kann der Sektorbelastungsverlauf 208 bspw. frühzeitig als Gerade basierend auf zwei Belastungswerten, also auf jeweils einem Belastungswert zweier Rotorblätter aufgebaut werden. Es kommt aber auch in Betracht, mehrere Werte, also z.B. drei Werte, aufzunehmen, wie oben bereits beschrieben wurde. Dadurch ist es noch immer möglich, den Blattbelastungsverlauf zu bestimmen, bevor der Rotor vollständig eine Umdrehung durchgeführt hat. Trotzdem liegen bereits drei Werte vor, die zudem auch ermöglichen, den Sektorbelastungsverlauf 208 nicht nur als Gerade, sondern auch als Kurve auszuführen. Bei Verwendung von drei Belastungswerten kann eine Kurve zweiter Ordnung, also beschreibbar durch ein Polynom zweiter Ordnung, verwendet werden. Es kommt aber auch in Betracht, trotzdem eine Gerade zu verwenden, die durch die Auswertung von drei Werten im Grunde überbestimmt ist, wodurch aber Ungenauigkeiten der Werte ausgeglichen werden können. Das Ergebnis kann also genauer werden.

Es kommt auch in Betracht, noch mehr Werte aufzunehmen. Werden vier Werte aufgenommen, was dann allerdings eine Umdrehung des Rotors erforderlich macht, kann weiterhin eine Gerade als Sektorbelastungsverlauf 208 verwendet werden, die noch stärker überbestimmt ist und damit können Ungenauigkeiten noch besser ausgeglichen werden. Es kommt aber auch in Betracht, eine Kurve zweiter Ordnung zu verwenden, die auch noch überbestimmt ist und damit Ungenauigkeiten ausgeglichen werden können. Bei Bedarf käme aber natürlich auch in Betracht, eine Kurve noch höherer Ordnung zu verwenden.

Sektorbelastungsverläufe durch eine Kurve erster oder zweiter Ordnung nachzubilden, ist die bevorzugte Variante.

Die Auswertung eines solchen Sektorbelastungsverlaufs 208 kann dadurch erfolgen, dass geprüft wird, ob innerhalb einer vorbestimmten Prüfzeitdauer T_{P} der Sektorbelastungsverlauf 208 den Extremlastwert 204 erreicht. In Figur 2 beträgt diese Prüfzeitdauer T_{P} etwa 2 s. Der aktuelle Wert des Sektorbelastungsverlaufs, also damit auch die aktuelle Belastung, hat aber erst einen reduzierten Extremlastwert 210 erreicht. Die Detektion ist also sehr frühzeitig, sodass die Maßnahme, das Verstellen der Rotorblätter, dazu führt, dass nur der reduzierte Extremlastwert 210 erreicht wird. Diese Prüfzeitdauer T_{P} kann auch in Abhängigkeit von der Verstellgeschwindigkeit der Blattverstellung gewählt werden.

Figur 3 zeigt ein Rotorfeld 320 in einer Frontansicht, in dem ebenfalls schematisch drei RotorblätterA-C angedeutet sind. Außerdem ist ein extremlasttreibendes Windereignis 322 eingezeichnet, also bspw. eine Böe. Dieses Windereignis 322 liegt in einem bestimmten Bereich des Rotorfeldes 320 vor und damit in einem bestimmten Sektor. Das Windereignis 322 kann auch mehrere Sektoren betreffen.

Ebenfalls ist schematisch eine Rotordrehung 324 durch einen entsprechenden Pfeil angedeutet. Durch die Drehung des Rotors verändert sich aber die Position des Windereignisses 322 nicht und dadurch wird ein Rotorblatt nach dem anderen dieses Windereignis erreichen, solange es vorliegt.

In Figur 3 sind exemplarisch zwei Sektoren S1 und S2 dargestellt, die jeweils durch einen mittleren Winkel ϕₓ bzw. ϕ_{y} repräsentiert werden können. In dem Sektor S2 befindet sich gerade das Rotorblatt B. Es kann erfasst werden, wie lange ein Rotorblatt oder zwei Rotorblätter benötigen, um diesen Winkel zu überstreichen. Daraus kann auch eine Belastungszunahmegeschwindigkeit abgeleitet werden.

Die Situation der Figur 3 ist in Figur 4 in einer Seitenansicht dargestellt. Das Windereignis 322 ist vereinfachend als Zylinder dargestellt, der sich in Richtung auf das Rotorfeld 320 zu bewegt. Das ist durch die Ereignisbewegung 326 angedeutet. Es ist damit erkennbar, dass das Windereignis 322 nur zeitlich begrenzt auftritt. Das gibt die Zeitdauer T_{E} an, die damit die Zeitskala des die Extremlast treibenden Windereignisses veranschaulicht.

Figuren 5 und 6 veranschaulichen, wie mit der Belastungssituation umgegangen werden kann, insbesondere wie ein Sektorbelastungsverlauf aufgenommen werden kann. In Figur 5 wird dazu exemplarisch ein Sektor etwa in 8-Uhr-Position betrachtet. In Figur 5 ist somit ebenfalls ein Rotorfeld 520 dargestellt, das drei Rotorblätter A, B und C aufweist. Das Rotorblatt C ist in der 8-Uhr-Position. Dort wird eine aktuelle Belastung bspw. durch entsprechende Dehnungsmessstreifen an der Blattwurzel bzw. in der Nähe der Blattwurzel aufgenommen. Außerdem wird ein Messwinkel αₘ aufgenommen. der Messwinkel αₘ ist der aktuelle Blattwinkel des Rotorblattes C. Er kann gemessen werden, aber er kann auch aus den Steuerdaten der Windenergieanlage ausgelesen bzw. weiterverwendet werden.

Abhängig vom Rotorblattwinkel und der erfassten Belastung ergibt sich somit eine für einen bestimmten Winkelwert normierte Belastung. Insbesondere kann hier der Blattwinkel von 0° oder ein Teillastwinkel als Referenzwert verwendet werden.

Auch hier dreht sich der Rotor gemäß Rotordrehung 524 weiter und eine Position später ist in Figur 6 veranschaulicht.

In Figur 6 ist somit das Rotorblatt B in der 8-Uhr-Position und dort wird wieder die Belastung des Blattes und der Blattwinkel, veranschaulicht durch den Messwinkel αₘ, aufgenommen.

Hier kann die auf einen Referenzwinkel normierte Belastung ausgerechnet werden, und dadurch liegen dann zwei Werte vor, aus der bereits ein Sektorbelastungsverlauf ermittelt werden kann. Durch die Normierung können unterschiedliche Blattstellungen herausgerechnet werden, denn es ist möglich, dass während der Drehung des Rotorblattes B von der 4-Uhr-Stellung zu der 8-Uhr-Stellung eine Blattverstellung durchgeführt wurde. Es ist auch möglich, dass die Rotorblätter B und C unterschiedliche Blattwinkel aufweisen. Um aber für den jeweils betrachteten Sektor eine Aussage besonders zum Belastungsverlauf basierend auf Werten unterschiedlicher Rotorblätter treffen zu können, erfolgt vorzugsweise diese Normierung auf einen Referenzwinkel.

Die für die 8-Uhr-Stellung exemplarisch erläuterte Vorgehensweise erfolgt gleichermaßen und auch im Wesentlichen zeitgleich für alle Sektoren, in die der Rotor und damit das Rotorfeld 520 eingeteilt wurde. Für alle Sektoren kann natürlich nicht exakt zeitgleich ein Belastungswert aufgenommen werden, weil die Rotorblätter natürlich immer nur in einem Sektor zur gleichen Zeit sein können. Es können also für drei Sektoren zugleich die entsprechenden Werte aufgenommen werden.

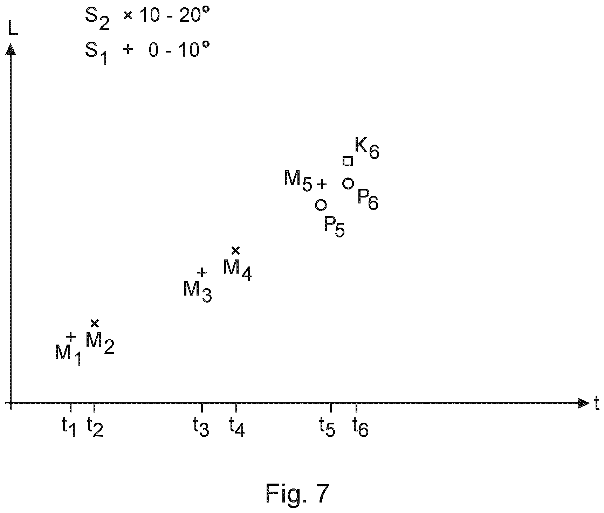

Figur 7 zeigt ein Zeitdiagramm, in dem Belastungsmessungen für zwei Sektoren dargestellt sind. Die Abszisse zeigt dabei eine Zeitachse und die Ordinate eine Last, die der linken Ordinate in Figur 2 entsprechen könnte, zumindest dem Grunde nach. In Figur 7 soll die Verbesserung einer Prognose prinzipiell erläutert werden, sodass konkrete Lastwerte nicht aufgetragen sind. Auch ansonsten ist Figur 2 sehr schematisch. Hier wird davon ausgegangen, dass für knapp eine Umdrehung jeweils Belastungswerte in zwei Sektoren betrachtet werden.

Messungen in dem Sektor S₁ sind durch ein + dargestellt und Messungen in dem Sektor S₂ durch ein x. Entsprechend erfolgt die erste Messung zum Zeitpunkt t₁ für den ersten Sektor, die nächste Messung zum Zeitpunkt t₂ für den zweiten Sektor. Zum Zeitpunkt ts erfolgt wieder eine Messung im ersten Sektor, nämlich für das nächste Blatt, und zum Zeitpunkt t₄ für den zweiten Sektor, ebenfalls für dieses nächste Blatt. Diese Messwerte sind als Messwerte M₁-M₄ gekennzeichnet. Aus den Messwerten M₁ und M₃ für den ersten Sektor kann somit ein Sektorbelastungsverlauf bspw. als Gerade ermittelt werden. Daraus lässt sich ein Belastungswert für den Zeitpunkt ts prognostizieren, der in dem Diagramm als P₅ eingezeichnet ist. Als Symbol wurde ein Kreis gewählt, um deutlich zu machen, dass dies keine Messung, sondern eine Prognose ist. Ebenso ist für den Zeitpunkt ts ein Prognosewert P₆ für den zweiten Sektor bestimmt worden, nämlich aus den Messwerten M₂ und M₄.

Nun wird zum Zeitpunkt ts eine weitere Messung M₅ durchgeführt und für die stellt sich heraus, dass sie über den Prognosewert P₅ liegt. Es kann also abgeleitet werden, dass entgegen der Prognose die Windgeschwindigkeit ansteigt. Diese Information kann auch für den zweiten Sektor S₂ verwendet werden. Daraus kann abgeleitet werden, dass die Prognose P₆ möglicherweise zu niedrig ist. Entsprechend kann für die aus der Entwicklung des ersten Sektors abgeleitete stärkere Erhöhung der Windgeschwindigkeit abgeleitet werden, dass dies für den Sektor S₂ auch zu erwarten ist. Entsprechend kann die Prognose P₆ zur korrigierten Prognose K₆ erhöht werden.

Die Erfindung beschreibt also eine Lösung, mit der frühzeitig ein Sektorbelastungsverlauf erkannt werden kann. Es wird also sektorweise ein Belastungsverlauf erkannt und zwar basierend auf Werten jedes Rotorblattes, das sich zu einem Messzeitpunkt in dem Sektor befindet.

Besonders Figur 2 veranschaulicht ein sogenanntes Laststeuerungsereignis, das zwar dort schematisch dargestellt ist, aber einer tatsächlichen Belastungsaufnahme entspricht. Die Darstellung soll dabei auch prinzipiell vermitteln, dass zu erkennen ist, dass die Lasten an allen Blättern bereits kontinuierlich steigen und daher ein frühes Eingreifen mittels des Blattwinkels möglich ist.

Dabei wurden besonders folgende Annahmen getroffen. Es wurde angenommen, dass die Lasten über eine charakteristische Zeitskala ansteigen, die typischerweise mehrere Sekunden lang ist. Weiter wird angenommen, dass eine lokale asymmetrische Windgeschwindigkeitserhöhung anliegt, die nicht über das gesamte Rotorfeld wirkt. Das soll besonders mit den Figuren 3 und 4 veranschaulicht werden. Daher kann das dargestellte Ereignis auch als Scherungsereignis betrachtet werden. Es wird von einer Größenordnung der Zeitskala ausgegangen, in der jedes Blatt mehrmals das Extremlasttreiben des Windereignisses bzw. der Windbedingung überstreicht. Jedes Blatt überstreicht also mehrmals den entsprechenden Sektor oder die entsprechenden Sektoren, in denen ein solches Extremlasttreiben des Windereignisses auftritt.

Besonders werden folgende Maßnahmen vorgeschlagen, die auch in den Figuren erläutert werden sollen. Es wird ein zeitlicher Verlauf der Blattbiegemomente aller Blätter aufgenommen. Es können also beispielsweise Dehnungsmessstreifen vorhanden sein, die ständig ausgewertet werden.

Es kann die Bestimmung einer Differenz zweier Blattbiegemomente zweier aufeinanderfolgender Blätter erfolgen, beispielsweise von Blatt C zu Blatt B, wie dies in den Figuren 5 und 6 erläutert ist. Es kann die Belastung in Abhängigkeit von der Rotorposition aufgenommen werden und eine Differenz gebildet werden. In diesem Fall werden also zwei Belastungswerte aufgenommen.

Bei der Bestimmung der Blattbiegung oder Blattbelastung und damit auch bei der Bestimmung der Differenz zweier Blattbiegemomente wird zusätzlich der Einfluss des Blattwinkels berücksichtigt. Dafür kann bspw. der Blattwinkel des vorauseilenden Blattes berücksichtigt werden, oder es kann ein allgemeiner Referenzwinkel zu Grunde gelegt werden. Jedenfalls wird der Einfluss des Blattwinkels berücksichtigt und das kann dadurch erfolgen, dass die Blattwinkeldifferenz zwischen den beiden Messzeitpunkten, also zwischen den beiden Rotorblättern, bestimmt wird. Diese Blattwinkeldifferenz kann bei der Differenz zwischen den beiden Blattbelastungswerten, also zwischen den beiden Blattbiegemomenten zusätzlich berücksichtigt werden, denn diese ruft eine relative Veränderung im Blattbiegemoment hervor, die hierdurch berücksichtigt wird.

Anhand dieser Differenzen sowohl des Blattwinkels als auch der Zeit wird ein Anstieg bestimmt, anhand dessen eine zu erwartende Extremlast in bestimmten diskreten Zeitabständen abgeschätzt wird.

Der Anstieg kann durch eine lineare Gerade bestimmt werden, aber auch durch ein Polynom höherer Ordnung. Dazu können ggf. mehr als zwei Werte aufgenommen werden.

Beim Überschreiten eines Grenzkriteriums wird dann eine Steuerung ausgelöst, um den Blattwinkel eines oder aller Blätter zu vergrößern, um die zu erwartende Extremlast zu verringern. Das Grenzkriterium kann gebildet werden aus einer Kombination von einer Extremlastgrenze, wie der Extremlastwert 204 der Figur 2, und einem zeitlichen Abstand vom aktuellen Zeitpunkt bis zum Auftreten einer entsprechenden Extremlast, also bis zum Erreichen der Extremlastgrenze. Mit anderen Worten kann zwar die Gerade, sofern sie überhaupt ansteigt, das Grenzkriterium, also den Extremlastwert 204 erreichen, liegt dies aber weit in der Zukunft, braucht noch keine Maßnahme ergriffen zu werden.

In wie viele Sektoren das Rotorfeld aufgelöst wird, kann gewählt werden, z.B. in 36 Sektoren, die jeweils 10° betragen.

Somit kann erreicht werden, dass durch die Betrachtung einer solchen Steigung frühzeitig die Blattwinkel verstellt werden können, wodurch die Pitchgeschwindigkeit niedrig gewählt werden kann. Entsprechend kann neben der Reduktion einer Extremlast an den Blättern auch eine schonendere Betriebsführung ermöglicht werden. Dadurch kann besonders erreicht werden, dass bei Pitchmotoren Spitzenlasten vermieden werden und die Turmauslenkung in Extremszenarien verringert wird.

Besonders kann die Last für eine drittel Rotorumdrehung extrapoliert werden. Nach einer drittel Rotorumdrehung können zwei Werte aufgenommen werden, nämlich für ein Blatt und ein folgendes Blatt und daraus kann extrapoliert werden. Für jeden betrachteten Sektor ist damit die Qualität der Prognose nach 1/X-Rotorumdrehung bekannt. Aktuell wird davon ausgegangen, dass X = 3 ist. Hier geht es besonders um eine Erkennung der Qualität der Prognose oder Verbesserung der Prognose, wie dies in Figur 7 erläutert ist.

Es wird zwar eine drittel Umdrehung benötigt, um in einem Sektor den Rotor von einem zum nächsten Rotorblatt weiterzudrehen, eine Abschätzung der Qualität der Prognose ist aber möglich, bevor eine weitere drittel Rotorumdrehung erfolgt ist, wobei aber eine drittel Rotorumdrehung auch abgewartet werden könnte. Es kann bereits dann, wenn sich der Rotor etwas weiterbewegt hat, erkannt werden, ob generell ein stärkerer oder schwächerer Windanstieg vorliegt. Diese Erkenntnis kann auf die bereits erstellten Prognosen angewendet werden und damit die Qualität abgeschätzt werden. Sollte sich also der Windanstieg in dieser Zeit beschleunigen, so ist dann erkennbar, dass eine Prognose überschritten wird.

Diese Information kann dann für die nun folgenden Sektoren genutzt werden, um die Prognose zu korrigieren, wie dies in Figur 7 erläutert ist.

Besonders wurde durch die vorgeschlagene Lösung eine Verbesserung erreicht. Bei einer bisherigen Variante, die nun verbessert wird, reagiert das Pitchsystem, wenn eine Extremlast in einem Einzelblatt auftritt und versucht, ein weiteres Ansteigen der Last durch ein sehrschnelles Herauspitchen zu vermeiden. Durch solche kurzfristige Reduktion des durch den Rotor aufgenommenen Schubs wird der Turm stark nach vorne beschleunigt, was ebenfalls zu ungewollten Turmextremlasten führt. Die vorgeschlagene Lösung ermöglicht aber ein langsameres Pitchen, also ein langsameres Verstellen der Rotorblätter, wodurch keine schnelle Schubabnahme resultiert und damit der Turm nicht stark nach vorne beschleunigt. Bisher würde der Turm ausgehend von einem zuvor stark aufgenommenen Schub quasi nach vorne zurückschwingen. Das wird nun vermieden.

## Patentansprüche

1. Verfahren zum Erkennen einer durch eine Windböe hervorgerufenen asymmetrischen Extremlast, die auf eine Windenergieanlage (100) wirkt, wobei die Windenergieanlage
- einen Rotor (106) mit wenigstens drei Rotorblättern (108) aufweist,
- die Rotorblätter (108) in ihrem Blattwinkel verstellbar sind, und
- der Rotor mit seinen Rotorblättern ein Rotorfeld (320) überstreicht,
und das Verfahren umfasst
- für jedes Rotorblatt (108) fortlaufendes Erfassen einer Blattlast,
- für wenigstens einen Sektor des Rotorfeldes Ermitteln wenigstens eines zeitlichen Sektorbelastungsverlaufs (208) aus erfassten Blattlasten unterschiedlicher Rotorblätter derselben Azimutposition, der einen zeitlichen Verlauf einer Belastung der Rotorblätter in dem Sektor beschreibt und einen für einen zukünftigen Zeitraum extrapolierten Verlauf beinhaltet, wobei
- die Blattlasten zu sukzessiven Erfassungszeitpunkten erfasst oder berücksichtigt werden, die um eine Teilzeitdauer auseinanderliegen, in der sich der Rotor um ein Rotorblatt weiterdreht, sodass für den jeweiligen Sektor aufeinanderfolgende Blattlasten erfasst oder berücksichtigt werden, und
- Prüfen auf das Erwarten einer Extremlast in Abhängigkeit von dem wenigstens einen Sektorbelastungsverlauf (208),
**dadurch gekennzeichnet, dass**
- ein Extremlastzeitpunkt bestimmt wird, an dem ein Auftreten einer Extremlast zu erwarten ist, insbesondere, dass
- der Extremlastzeitpunkt aus dem wenigstens einen Sektorbelastungsverlauf (208) bestimmt wird.

2. Verfahren nach Anspruch 1, **dadurch gekennzeichnet, dass**
- der Sektorbelastungsverlauf (208) als eine zeitliche Polynomfunktion erster oder höherer Ordnung ausgebildet ist, und/oder
- eine zu erwartende Extremlast angenommen wird, wenn der Sektorbelastungsverlauf (208) für einen zukünftigen Zeitpunkt einen vorbestimmten Blattbelastungsgrenzwert (204) erreicht oder überschreitet.

3. Verfahren nach Anspruch 1 oder 2, **dadurch gekennzeichnet, dass**
- aus wenigstens zwei aufeinanderfolgenden Blattlasten eines Sektors und wenigstens einer zugehörigen Teilzeitdauer der Sektorbelastungsverlauf (208) ermittelt wird, und
- für einen nächsten sukzessiven Erfassungszeitpunkt, der noch in der Zukunft liegt, geprüft wird, ob der Sektorbelastungsverlauf (208) einen bzw. den vorbestimmten Blattbelastungsgrenzwert (204) erreicht oder überschreitet.

4. Verfahren nach einem der vorstehenden Ansprüche, **dadurch gekennzeichnet, dass**
- mittels des Sektorbelastungsverlaufs (208) für einen zu prüfenden sukzessiven Erfassungszeitpunkt eine zu erwartende Blattlast ermittelt wird,
- zu dem zu prüfenden sukzessiven Erfassungszeitpunkt die aktuelle Blattlast erfasst und mit der zu erwartenden Blattlast verglichen wird, um eine Erwartungsabweichung zu ermitteln, und
- in Abhängigkeit von der ermittelten Erwartungsabweichung der Sektorbelastungsverlauf (208) angepasst wird.

5. Verfahren nach einem der vorstehenden Ansprüche, **dadurch gekennzeichnet, dass**
- die Blattlasten eines Rotorblattes, das eine Blattwurzel aufweist, jeweils am Rotorblatt im Bereich der Blattwurzel [für Beschreibung: innere 10%] erfasst werden, insbesondere jeweils als Blattbiegung oder Blattbiegemoment.

6. Verfahren nach einem der vorstehenden Ansprüche, **dadurch gekennzeichnet, dass**
- mehrere Sektoren des Rotorfeldes (320) auf Extremlasten beobachtet werden und
- zu jedem beobachteten Sektor die Blattlasten zu den sukzessiven Erfassungszeitpunkten erfasst werden, sodass für jeden Sektor aufeinanderfolgende Blattlasten erfasst werden, und daraus wenigstens eine Veränderung der Blattlasten des jeweiligen Sektors ermittelt wird, und
- aus der wenigstens einen Veränderung der Blattlasten eines ersten Sektors auf eine zu erwartende Veränderung der Blattlasten eines zweiten Sektors geschlossen wird, insbesondere so, dass
- der Sektorbelastungsverlauf (208) des zweiten Sektors in Abhängigkeit von dem Sektorbelastungsverlauf (208) des ersten Sektors angepasst wird, und/oder so, dass.
- für den ersten Sektor ein erster Sektorbelastungsverlauf bestimmt wird und für den zweiten Sektor ein zweiter Sektorbelastungsverlauf bestimmt wird,
- für den ersten Sektorbelastungsverlauf eine erste Erwartungsabweichung ermittelt wird, und
- der zweite Sektorbelastungsverlauf in Abhängigkeit von der ersten Erwartungsabweichung angepasst wird.

7. Verfahren nach einem der vorstehenden Ansprüche, **dadurch gekennzeichnet, dass**
- die Blattwinkel der Rotorblätter voneinander unabhängig verstellbar sind und/oder
- zum Ermitteln eines Sektorbelastungsverlaufs (208) zu jeder erfassten Blattlast der Blattwinkel des Rotorblattes berücksichtigt wird, insbesondere, dass
- jede erfasste Blattlast in Abhängigkeit von dem zugehörigen Blattwinkel in eine äquivalente Blattlast umgerechnet wird, die einer Blattlast bei einem vorbestimmten Referenzblattwinkel entspricht.

8. Verfahren nach einem der vorstehenden Ansprüche, **dadurch gekennzeichnet, dass**
- jede erfasste Blattlast in Abhängigkeit von dem zugehörigen Blattwinkel in einen lokalen Windwert umgerechnet wird, wobei insbesondere vorgesehen ist, dass
- aus den Windwerten einiger oder aller Sektoren ein Windfeld erstellt wird und/oder dass
- jeder Sektorbelastungsverlauf in einen Windverlauf in dem Sektor umgerechnet wird, sodass jeder Windverlauf einen für einen zukünftigen Zeitraum extrapolierten Verlauf beinhaltet, wobei insbesondere vorgesehen ist, dass
- aus den Windverläufen einiger oder aller Sektoren ein Windfeldverlauf erstellt wird.

9. Verfahren nach einem der vorstehenden Ansprüche, **dadurch gekennzeichnet, dass**
- bei Erkennen einer zu erwartenden Extremlast in wenigstens einem Sektor ein Anlagenbetrieb verändert wird, um eine Belastung der Windenergieanlage (100) zu verringern oder zu begrenzen, insbesondere, dass der Anlagenbetrieb dadurch verändert wird, dass der Blattwinkel wenigstens eines der Rotorblätter verstellt wird, um eine Blattlast an dem wenigstens einem Rotorblatt (108) zu verringern oder zu begrenzen, wobei insbesondere
- wenn ein Extremlastzeitpunkt erkannt wurde, an dem die Extremlast zu erwarten ist, der Anlagenbetrieb verändert wird, bevor der Extremlastzeitpunkt erreicht wird, und/oder
- ein Sektor identifiziert wird, in dem die Extremlast erwartet wird, und der Blattwinkel eines Rotorblattes verändert wird, bevor es den Sektor erreicht, für den die Extremlast erwartet wird, und/oder
- die Blattwinkel aller Rotorblätter verstellt werden.

10. Verfahren nach einem der vorstehenden Ansprüche, **dadurch gekennzeichnet, dass**
- aus dem wenigstens einen ermittelten Sektorbelastungsverlauf (208),
- ein Verstellwinkel zum Verstellen wenigstens eines Rotorblattes (106) bestimmt wird, und/oder,
- ein Zielzeitpunkt bestimmt wird, bis zu dem der Verstellwinkel verstellt sein soll, und insbesondere aus dem Zielzeitpunkt und dem Verstellwinkel eine Verstellgeschwindigkeit bestimmt und vorgegeben wird, und/oder
- ein minimal einzustellender Blattwinkel bestimmt wird, unter den ein Rotorblatt in seinem Blattwinkel nicht verstellt wird.

11. Verfahren zum Steuern einer Windenergieanlage (100), wobei
die Windenergieanlage in Abhängigkeit von einem Erkennen einer durch eine Windböe hervorgerufenen asymmetrischen Extremlast gesteuert wird, die auf eine Windenergieanlage (100) wirkt, wobei
das Verfahren zum Steuern wenigstens ein Verfahren nach einem der vorstehenden Ansprüche umfasst oder verwendet.

12. Windenergieanlage (100), dazu vorbereitet,
- ein Verfahren auszuführen zum Erkennen einer durch eine Windböe hervorgerufenen asymmetrischen Extremlast, die auf die Windenergieanlage (100) wirkt, und/oder
- ein Verfahren auszuführen zum Steuern der Windenergieanlage (100), wobei die Windenergieanlage in Abhängigkeit von einem Erkennen einer durch eine Windböe hervorgerufenen asymmetrischen Extremlast gesteuert wird, die auf eine Windenergieanlage wirkt,
wobei die Windenergieanlage
- einen Rotor (106) mit wenigstens drei Rotorblättern (108) aufweist,
- die Rotorblätter (108) in ihrem Blattwinkel verstellbar sind, und
- der Rotor (106) mit seinen Rotorblättern (108) ein Rotorfeld (320) überstreicht,
und das Verfahren umfasst
- für jedes Rotorblatt (108) fortlaufendes Erfassen einer Blattlast,
- für wenigstens einen Sektor des Rotorfeldes Ermitteln wenigstens eines zeitlichen Sektorbelastungsverlaufs (208) aus erfassten Blattlasten unterschiedlicher Rotorblätter derselben Azimutposition, der einen zeitlichen Verlauf einer Belastung der Rotorblätter in dem Sektor beschreibt und einen für einen zukünftigen Zeitraum extrapolierten Verlauf beinhaltet, wobei
- die Blattlasten zu sukzessiven Erfassungszeitpunkten erfasst oder berücksichtigt werden, die um eine Teilzeitdauer auseinanderliegen, in der sich der Rotor (106) um ein Rotorblatt (108) weiterdreht, sodass für den jeweiligen Sektor aufeinanderfolgende Blattlasten erfasst oder berücksichtigt werden, und
- Prüfen auf das Erwarten einer Extremlast in Abhängigkeit von dem wenigstens einen Sektorbelastungsverlauf (208),
wobei
- ein Extremlastzeitpunkt bestimmt wird, an dem ein Auftreten einer Extremlast zu erwarten ist, insbesondere, dass
- der Extremlastzeitpunkt aus dem wenigstens einen Sektorbelastungsverlauf (208) bestimmt wird.

13. Windenergieanlage (100) nach Anspruch 12, **dadurch gekennzeichnet, dass**
- die Windenergieanlage (100) dazu vorbereitet ist, ein Verfahren gemäß einem der Ansprüche 1 bis 11 auszuführen, insbesondere, dass
- die Windenergieanlage (100) eine Steuereinrichtung zum Ausführen eines der Verfahren aufweist und das Verfahren in der Steuereinrichtung implementiert ist.

## Claims

1. A method for identifying an asymmetrical extreme load which is caused by a gust of wind and acts on a wind power installation (100), wherein the wind power installation
- has a rotor (106) having at least three rotor blades (108);
- the rotor blades (108) are adjustable in terms of the blade angle thereof; and
- the rotor by way of the rotor blades thereof sweeps a rotor field (320);
and the method comprises
- continuous detecting of a blade load for each rotor blade (108);
- ascertaining for at least one sector of the rotor field at least one temporal sector load profile (208) from blade loads detected of different rotor blades with the same azimuth position, said sector load profile (208) describing a temporal profile of a load on the rotor blades in the sector and containing a profile extrapolated for a future temporal period, wherein
- the blade loads are detected or taken into account at successive detection time points which are spaced apart by a partial period in which the rotor rotates further by one rotor blade, so that successive blade loads are detected or taken into account for the respective sector; and
- checking in terms of expecting an extreme load as a function of the at least one sector load profile (208),
**characterized in that**
- an extreme load time point at which an extreme load is expected to arise is determined, in particular wherein
- the extreme load time point is determined from the at least one sector load profile (208).

2. The method as claimed in claim 1, wherein
- the sector load profile (208) is configured as a temporal polynomial function of the first or a higher order; and/or
- an extreme load to be expected is assumed when the sector load profile (208) for a future time point reaches or exceeds a predetermined blade load limit (204).

3. The method as claimed in claim 1 or 2, wherein
- the sector load profile (208) is ascertained from at least two successive blade loads of a sector and at least one associated partial period; and
- it is checked whether the sector load profile (208) for a next successive detection time point, which is still in the future, reaches or exceeds a, or the predetermined, blade load limit (204), respectively.

4. The method as claimed in one of the preceding claims, wherein
- a blade load to be expected is ascertained by means of the sector load profile (208) for a successive detection time point to be checked;
- the current blade load is detected at the successive detection time point to be checked and is compared with the blade load to be expected so as to ascertain an expectation variance; and
- the sector load profile (208) is adapted as a function of the ascertained expectation variance.

5. The method as claimed in one of the preceding claims, wherein
- the blade loads of a rotor blade that has a blade root are in each case detected, in particular in each case as blade flexing or blade bending moment, on the rotor blade in the region of the blade root [for description: inner 10%].

6. The method as claimed in one of the preceding claims, wherein
- a plurality of sectors of the rotor field (320) are observed for extreme loads; and
- the blade loads for each observed sector are detected at the successive detection time points, so that successive blade loads are detected for each sector and at least one change in the blade loads of the respective sector is ascertained therefrom; and
- a conclusion pertaining to a change to be expected in the blade loads of a second sector is drawn from the at least one change in the blade loads of a first sector, in particular such that
- the sector load profile (208) of the second sector is adapted as a function of the sector load profile (208) of the first sector; and/or such that
- a first sector load profile is determined for the first sector, and a second sector load profile is determined for the second sector;
- a first expectation variance is ascertained for the first sector load profile; and
- the second sector load profile is adapted as a function of the first expectation variance.

7. The method as claimed in one of the preceding claims, wherein
- the blade angles of the rotor blades are adjustable in a mutually independent manner; and/or
- the blade angle of the rotor blade is taken into account for determining a sector load profile (208) for each blade load detected, in particular wherein
- each blade load detected as a function of the associated blade angle is converted into an equivalent blade load which corresponds to a blade load at a predetermined reference blade angle.

8. The method as claimed in one of the preceding claims, wherein
- each blade load detected as a function of the associated blade angle is converted into a local wind value, wherein it is provided in particular that
- a wind field is established from the wind values of some or all sectors; and/or that
- each sector load profile is converted into a wind profile in the sector so that each wind profile contains a profile extrapolated for a future temporal period, wherein it is provided in particular that
- a wind field profile is established from the wind profiles of some or all sectors.

9. The method as claimed in one of the preceding claims, wherein
- when identifying an extreme load to be expected an installation operation in at least one sector is changed so as to reduce or delimit a load on the wind power installation (100), in particular wherein the installation operation is changed in that the blade angle of at least one of the rotor blades is adjusted so as to reduce or delimit a blade load on the at least one rotor blade (108), wherein in particular
- when an extreme load time point at which the extreme load is to be expected has been identified, the installation operation is changed before the extreme load time point is reached; and/or
- a sector in which the extreme load is expected is identified, and the blade angle of a rotor blade is changed before said rotor blade reaches the sector for which the extreme load is expected; and/or
- the blade angle of all rotor blades are adjusted.

10. The method as claimed in one of the preceding claims, wherein
- from the at least one ascertained sector load profile (208)
- an adjustment angle for adjusting at least one rotor blade (106) is determined; and/or
- a target time point until which the adjustment angle is to be adjusted is determined, and an adjustment speed is in particular determined and predefined from the target time point and the adjustment angle; and/or
- a minimum blade angle to be adjusted is determined, a rotor blade in terms of the blade angle thereof not being adjusted below said minimum blade angle to be adjusted.

11. A method for controlling a wind power installation (100), wherein
the wind power installation is controlled as a function of identifying an asymmetrical extreme load which is caused by a gust of wind and acts on a wind power installation (100); wherein
the method for controlling comprises or uses at least one method as claimed in one of the preceding claims.

12. A wind power installation (100), prepared for
- carrying out a method for identifying an asymmetrical extreme load which is caused by a gust of wind and acts on the wind power installation (100); and/or
- carrying out a method for controlling the wind power installation (100), wherein the wind power installation is controlled as a function of identifying an asymmetrical extreme load which is caused by a gust of wind and acts on a wind power installation;
wherein the wind power installation
- has a rotor (106) having at least three rotor blades (108);
- the rotor blades (108) are adjustable in terms of the blade angles thereof; and
- the rotor (106) by way of the rotor blades (108) thereof sweeps a rotor field (320);
and the method comprises
- continuous detecting of a blade load for each rotor blade (108);
- ascertaining for at least one sector of the rotor field at least one temporal sector load profile (208) from blade loads detected of different rotor blades with the same azimuth position, said sector load profile (208) describing a temporal profile of a load on the rotor blades in the sector and containing a profile extrapolated for a future temporal period; wherein
- the blade loads are detected or taken into account at successive detection time points which are spaced apart by a partial period in which the rotor (106) rotates further by one rotor blade (108), so that successive blade loads are detected or taken into account for the respective sector; and
- checking in terms of expecting an extreme load as a function of the at least one sector load profile (208),
wherein
- an extreme load time point at which an extreme load is expected to arise is determined, in particular wherein
- the extreme load time point is determined from the at least one sector load profile (208).

13. The wind power installation (100) as claimed in claim 12, wherein
- the wind power installation (100) is prepared for carrying out a method as claimed in one of claims 1 to 11, in particular wherein
the wind power installation (100) has a control device for carrying out one of the methods, and the method is implemented in the control device.

## Revendications

1. Procédé pour détecter une charge extrême asymétrique provoquée par une rafale de vent, qui agit sur une éolienne (100), dans lequel l'éolienne
- présente un rotor (106) avec au moins trois pales de rotor (108),
- les pales de rotor (108) sont réglables dans leur angle de pale, et
- le rotor avec ses pales de rotor balaye un champ de rotor (320),
et le procédé comprend
- l'acquisition continue d'une charge de pale pour chaque pale de rotor (108),
- pour au moins un secteur du champ de rotor l'établissement d'au moins une variation de sollicitation de secteur dans le temps (208) à partir des charges de pale acquises de différentes pales de rotor de la même position azimutale, qui décrit une variation dans le temps d'une sollicitation des pales de rotor dans le secteur et comporte une variation extrapolée pour une période future, dans lequel
- les charges de pale sont acquises ou prises en compte à des moments d'acquisition successifs, qui sont séparés d'une durée partielle pendant laquelle le rotor continue de tourner selon une pale de rotor, de sorte que, pour le secteur respectif, des charges de pale consécutives sont acquises ou prises en compte, et
- le contrôle de l'attente d'une charge extrême en fonction de l'au moins une variation de sollicitation de secteur (208),
**caractérisé en ce que**
- un moment de charge extrême, auquel il faut s'attendre à une apparition d'une charge extrême, est déterminé, en particulier que
- le moment de charge extrême est déterminé à partir de l'au moins une variation de sollicitation de secteur (208).

2. Procédé selon la revendication 1, **caractérisé en ce que**
- la variation de sollicitation de secteur (208) est réalisée comme une fonction polynomiale temporelle de premier ordre ou d'ordre supérieur, et/ou
- une charge extrême à laquelle il faut s'attendre est supposée lorsque la variation de sollicitation de secteur (208) pour un moment futur atteint ou dépasse une valeur limite de sollicitation de pale (204) prédéfinie.

3. Procédé selon la revendication 1 ou 2, **caractérisé en ce que**
- la variation de sollicitation de secteur (208) est établie à partir d'au moins deux charges de pale consécutives d'un secteur et d'au moins une durée partielle associée, et
- pour un moment d'acquisition successif prochain, qui se situe encore dans le futur, on contrôle si la variation de sollicitation de secteur (208) atteint ou dépasse une ou la valeur limite de sollicitation de pale (204) prédéfinie.

4. Procédé selon l'une quelconque des revendications précédentes, **caractérisé en ce que**
- une charge de pale à laquelle il faut s'attendre est établie au moyen de la variation de sollicitation de secteur (208) pour un moment d'acquisition successif à contrôler,
- au moment d'acquisition successif à contrôler, la charge de pale actuelle est acquise et comparée à la charge de pale à laquelle il faut s'attendre, afin d'établir un écart d'attente, et
- la variation de sollicitation de secteur (208) est adaptée en fonction de l'écart d'attente établi.

5. Procédé selon l'une quelconque des revendications précédentes, **caractérisé en ce que**
- les charges de pale d'une pale de rotor, qui présente un pied de pale, sont acquises respectivement sur la pale de rotor dans la zone du pied de pale [pour la description : 10 % intérieurs], en particulier respectivement comme flexion de pale ou couple de flexion de pale.

6. Procédé selon l'une quelconque des revendications précédentes, **caractérisé en ce que**
- plusieurs secteurs du champ de rotor (320) sont surveillés à la recherche de charges extrêmes et
- pour chaque secteur surveillé, les charges de pale sont acquises aux moments d'acquisition successifs, de sorte que, pour chaque secteur, des charges de pale consécutives sont acquises, et au moins une modification des charges de pale du secteur respectif est établie à partir de celles-ci, et
- à partir de l'au moins une modification des charges de pale d'un premier secteur, on déduit une modification attendue des charges de pale d'un deuxième secteur, en particulier de sorte que
- la variation de sollicitation de secteur (208) du deuxième secteur est adaptée en fonction de la variation de sollicitation de secteur (208) du premier secteur, et/ou de sorte que
- une première variation de sollicitation de secteur est déterminée pour le premier secteur et une deuxième variation de sollicitation de secteur est déterminée pour le deuxième secteur,
- un premier écart d'attente est établi pour la première variation de sollicitation de secteur, et
- la deuxième variation de sollicitation de secteur est adaptée en fonction du premier écart d'attente.

7. Procédé selon l'une quelconque des revendications précédentes, **caractérisé en ce que**
- les angles de pale des pales de rotor sont réglables indépendamment les uns des autres et/ou
- pour établir une variation de sollicitation de secteur (208) pour chaque charge de pale acquise, l'angle de pale de la pale de rotor est pris en compte, en particulier, que
- chaque charge de pale acquise est convertie, en fonction de l'angle de pale associé, en une charge de pale équivalente, qui correspond à une charge de pale pour un angle de pale de référence prédéfini.

8. Procédé selon l'une quelconque des revendications précédentes, **caractérisé en ce que**
- chaque charge de pale acquise est convertie en une valeur de vent locale en fonction de l'angle de pale associé, dans lequel il est prévu en particulier que
- un champ de vent soit élaboré à partir des valeurs de vent de certains ou de tous les secteurs et/ou que
- chaque variation de sollicitation de secteur est convertie en une variation de vent dans le secteur, de sorte que chaque variation de vent comporte une variation extrapolée pour une période future, dans lequel il est prévu en particulier que
- une variation de champ de vent soit élaborée à partir des variations de vent de certains ou de tous les secteurs.

9. Procédé selon l'une quelconque des revendications précédentes, **caractérisé en ce que**
- lors de la détection d'une charge extrême à laquelle il faut s'attendre dans au moins un secteur, un fonctionnement de l'éolienne est modifié, afin de diminuer ou de limiter une sollicitation de l'éolienne (100), en particulier que le fonctionnement de l'éolienne est modifié par le fait que l'angle de pale d'au moins une des pales de rotor est réglé afin de diminuer ou de limiter une charge de pale sur l'au moins une pale de rotor (108), dans lequel en particulier
- lorsqu'un moment de charge extrême auquel il faut s'attendre à la charge extrême a été détecté, le fonctionnement de l'éolienne est modifié avant que le moment de charge extrême soit atteint, et/ou
- un secteur est identifié, dans lequel la charge extrême est attendue, et l'angle de pale d'une pale de rotor est modifié avant qu'il atteigne le secteur pour lequel la charge extrême est attendue, et/ou
- les angles de pale de toutes les pales de rotor sont réglés.

10. Procédé selon l'une quelconque des revendications précédentes, **caractérisé en ce que**
- à partir de l'au moins une variation de sollicitation de secteur (208) établie,
- un angle de réglage pour régler au moins une pale de rotor (106) est déterminé, et/ou,
- un moment cible jusqu'auquel l'angle de réglage doit être réglé est déterminé, et en particulier une vitesse de réglage est déterminée et prédéfinie à partir du moment cible et de l'angle de réglage, et/ou
- un angle de pale à ajuster au minimum, au-dessous duquel une pale de rotor n'est pas réglée dans son angle de pale, est déterminé.

11. Procédé pour commander une éolienne (100), dans lequel
l'éolienne est commandée en fonction d'une détection d'une charge extrême asymétrique provoquée par une rafale de vent, qui agit sur une éolienne (100), dans lequel
le procédé pour commander comprend ou utilise au moins un procédé selon l'une quelconque des revendications précédentes.

12. Éolienne (100), destinée à
- mettre en oeuvre un procédé pour détecter une charge extrême asymétrique provoquée par une rafale de vent, qui agit sur l'éolienne (100), et/ou
- mettre en oeuvre un procédé pour commander l'éolienne (100), dans lequel l'éolienne est commandée en fonction d'une détection d'une charge extrême asymétrique provoquée par une rafale de vent, qui agit sur une éolienne,
dans lequel l'éolienne
- présente un rotor (106) avec au moins trois pales de rotor (108),
- les pales de rotor (108) sont réglables dans leur angle de pale, et
- le rotor (106) avec ses pales de rotor (108) balaye un champ de rotor (320),
et le procédé comprend
- pour chaque pale de rotor (108), l'acquisition continue d'une charge de pale,
- pour au moins un secteur du champ de rotor, l'établissement d'au moins une variation de sollicitation de secteur dans le temps (208) à partir des charges de pale acquises de différentes pales de rotor de la même position azimutale, qui décrit une variation dans le temps d'une sollicitation des pales de rotor dans le secteur et comporte une variation extrapolée pour une période future, dans lequel
- les charges de pale sont acquises ou prises en compte à des moments d'acquisition successifs qui sont séparés d'une durée partielle pendant laquelle le rotor (106) continue de tourner selon une pale de rotor (108), de sorte que, pour le secteur respectif, des charges de pale consécutives sont acquises ou prises en compte, et
- le contrôle de l'attente d'une charge extrême en fonction de l'au moins une variation de sollicitation de secteur (208),
dans lequel
- un moment de charge extrême, auquel il faut s'attendre à une apparition d'une charge extrême, est déterminé, en particulier, que
- le moment de charge extrême est déterminé à partir de l'au moins une variation de sollicitation de secteur (208).

13. Éolienne (100) selon la revendication 12, **caractérisé en ce que**
- l'éolienne (100) est destinée à mettre en oeuvre un procédé selon l'une quelconque des revendications 1 à 11, en particulier que
- l'éolienne (100) présente un dispositif de commande pour mettre en oeuvre l'un des procédés et le procédé est implémenté dans le dispositif de commande.
